Europäisches Patentamt

European Patent Office

Office européen des brevets

(19)

(11) EP 0 785 390 A2

## EUROPEAN PATENT APPLICATION

(12)

(43) Date of publication:
23.07.1997 Bulletin 1997/30

(51) Int. Cl.$^6$: F16M 11/42

(21) Application number: 97106153.6

(22) Date of filing: 16.09.1991

(84) Designated Contracting States:
BE DE FR GB NL

(30) Priority: 01.10.1990 US 591524
01.10.1990 US 591525
17.04.1991 US 686823

(62) Document number(s) of the earlier application(s) in accordance with Art. 76 EPC:
91919517.2 / 0 555 314

(71) Applicant: Chapman, Leonard T.
North Hollywood, California 91605 (US)

(72) Inventor: Chapman, Leonard T.
North Hollywood, California 91605 (US)

(74) Representative: Nicholls, Michael John
J.A. KEMP & CO.
14, South Square
Gray's Inn
London WC1R 5LX (GB)

Remarks:
This application was filed on 15 - 04 - 1997 as a divisional application to the application mentioned under INID code 62.

(54) Camera pedestal

(57) A camera support (100) has a pedestal (101) separable from a dolly (102). The pedestal (101) has a gas-filled telescoping column (900) with a tapered driver cylinder (921) to provide a uniform load counterbalancing force with the column (900) at any position.

FIG. 1.

EP 0 785 390 A2

## Description

The application relates to the field of mobile wheeled equipment and specifically to camera dollies and cranes used in the television and motion picture industries. In the production of television programs or motion pictures, it is often necessary to maneuver a camera between different filming positions. The required camera movement may include elevating and lowering the camera as well lateral and longitudinal movement between the camera and subject. Continuous translation of the camera, i.e., to follow an action or moving sequence is also occasionally called for. Camera cranes and dollies are employed to support the camera and perform the desired camera movement.

For filming in close quarters, a compact camera dolly is desired. For example, to fit through narrow doorways, the length and width of the camera dolly should be limited. With the advent of widespread "on location" filming, the camera dolly may have to be hand carried, e.g., up narrow stairways, across uneven outdoor terrain, etc. Accordingly, it is desirable for the camera dolly to be lightweight and easily carried.

It is important for the camera dolly to provide a stable platform for the camera, both at rest and when moving, since any shock, vibrations, jarring or rocking imparted by the dolly will cause the recorded film or video image sequence to "jump" unacceptably. Consequently, the dolly structure must be rigid and secure. The camera dolly should preferably also be capable of readily supporting not only a camera of substantial weight, but also a camera operator and a second individual such as a cinematographer, director, lighting specialist, etc. Preferably, the camera dolly is able to quickly, but silently and smoothly translate, rotate and elevate the camera. Quiet operation of all aspects of dolly movement, such as rolling, steering, turning and elevating or lowering a camera is especially important during the production of live television wherein even intermittent low or muffled equipment noise can be disruptive.

For added versatility, the camera dolly should be capable of both conventional steering and crab steering.

In conventional steering, typically the front wheels remain fixed and the rear wheels steer. In crab steering, all of the dolly wheels are steered together, thereby permitting the dolly to be moved in any direction. In certain filming sequences, it is necessary to shift between conventional and crab steering modes. This shifting must be performed quickly and smoothly. In addition, the camera dolly operators or dolly grips must continue to smoothly push the dolly while steering mode shifting is made, during a filming sequence. This can be difficult because shifting has heretofore required a free arm or leg to actuate a shift handle or lever and because shifting can only occur when the wheels are properly aligned.

In conventional steering, to maintain acceptable steering performance while the dolly is steered on a curved path, a conventional steering corrector or transmission is required. The corrector adjusts the steering angle of the camera dolly wheels to allow the camera dolly to properly track a curved path. This prevents any scraping or scrubbing of the wheels against the floor or supporting surface which would tend to vibrate and disturb the camera and filming sequence as well as increasing rolling friction or resistance.

For translational filming sequences over uneven surfaces, for example on outdoor terrain, track rails can be laid to provide a smooth rolling surface for the camera dolly. The camera dolly should accordingly be able to be quickly and easily set up for use on track rails.

Both 3-wheel and 4-wheel camera dollies or 3-corner pedestals have been proposed and used in the past (generally having dual wheels at each corner). Three-wheel configurations are advantageous as they are stable, i.e., a tripod configuration, even on uneven ground. However, three-wheel dollies or pedestals are not well suited for operation on track or allowing for passage through narrow doorways without incurring unacceptable levels of "tilt line" stability. Four-wheel camera dollies can perform well on track and have much larger wheelbase ranges but can be less stable than three-wheel units. Consequently, heretofore, there have been tradeoffs to be weighed in selecting a three-wheel or a four-wheel design.

In camera dollies or pedestals using a telescoping column, a mechanism for smoothly and quietly raising and lowering the camera platform is required. A purely manual system is generally insufficient since the weight of the camera may be substantial and the combination of inertia, friction and the application of the lifting or dropping force by hand will not ordinarily provide the necessary smooth, quiet and accurate positioning. Consequently, counterbalancing or compensation systems have been provided in camera pedestals to compensate for the weight of the camera and facilitate cinematographically acceptable changes in camera height or elevation. However, these known pedestals commonly generate perceptible noise, especially during quick movements. In addition, they may have a limited range of vertical movement or may tend to drift from position when heavily loaded.

Various camera dolly and camera pedestals have been proposed in the past. See for example Zelli, U.S. Patent No. 4,003,584; Galione, U.S. Patent No. 4,094,484; and Nakazawa, U.S. Patent No. 4,757,970. However, the present camera pedestal achieves performance and characteristic advantages.

Accordingly, it is an object of the invention to provide an improved camera support.

To these ends, according to the present application there is provided an adjustable pedestal for a camera, comprising:

an extensible column supporting a mounting plate for a camera, with the column containing a compressed gas to counter-balance the weight of the camera when mounted;

a hollow drive cylinder having inner walls and first and second ends;

a cylindrical piston slidably displaceable within said cylinder;

a seal on said piston, substantially slidably sealing said piston against said inner walls at any piston position between said first and second ends of said cylinder; and

a first column section; characterised by further comprising:

a compressed gas tank in the pedestal; and in that

said inner walls of said cylinder taper outwards from the first end of the cylinder to the second end of the cylinder, with the second end having a cross-sectional area greater than that of said first end; in that

the hollow cylinder connects to the tank in a gas tight manner; in that

said cylinder piston has a radius r and a surface area of $\pi r^2$ on which, in use, the compressed gas exerts a force; in that

said seal is expandable; and in that

said first column section is attached to said piston.

Preferably, the hollow tapered drive cylinder has a round cross-section area which uniformly expands from the bottom of the cylinder to the top of the cylinder. The piston slidably displaceable within the cylinder preferably has only one seal which seals the piston against the inner drive cylinder walls throughout the entire stroke of the piston. The first column section is attached to the piston. The tank has a volume $V_t$ and is fillable with a pressurized gas, e.g., compressed nitrogen, and is connected to the drive cylinder which has a volume $V_c$. In the case where the lower end of the cylinder has a circular cross-section area $A_1$; the upper end of the cylinder has a cross-section $A_2$; the initial gas pressure is $P_i$ and the final gas pressure is $P_f$, the relationship of the areas, volumes, and pressure is

$$P_i A_1 = P_f \left( \frac{V_t}{V_t + V_c} \right) A_2.$$

With this relationship, the compensating force acting on the piston remains constant through the stroke of the piston in the drive cylinder. This occurs because even though the gas pressure within the tank and cylinder drops slightly as the piston moves up in the cylinder due to an increase in volume, the area on the piston face on which the gas pressure exerts force increases by a corresponding amount. Consequently, whether the pedestal is near the top or bottom of its range of positions, the compensating force remains the same. This prevents the camera mounted on the pedestal from "drifting" up or down due to an inexact compensating force, i.e., the camera will generally remain substantially exactly as it has been vertically positioned. The column is eccentrically positioned to the back of the tank for improved flexibility and ergonomics.

The drawings are designed for the purpose of illustration only and are not intended as a definition of the limits of the invention.

In the drawings, wherein similar reference characters denote similar elements throughout the several views:

Fig. 1 is a perspective view of the camera dolly/pedestal with the column of the pedestal fully extended;
Fig. 1A is a left side elevation view of the camera dolly and pedestal supporting a camera;
Fig. 1B is a side view of the pedestal separated from the dolly and standing on the floor;
Fig. 2 is a schematically illustrated top view thereof with the camera platform and steering wheel removed and showing the steering system;
Fig. 3 is a section view fragment of the rear left leg and chassis section of the dolly taken along line 3-3 of Fig. 2, illustrating the crab-conventional steering shift apparatus;
Fig. 4 is a partial section view of the back end of the dolly of Fig. 2 further illustrating the shift apparatus and steering drive system;
Fig. 5 is an exploded perspective view of a leg of the camera dolly showing the leg belt tensioning apparatus and kingpin;
Fig. 6 is a section view fragment of the right rear leg and chassis, taken along line 6-6 of Fig. 2;
Fig. 7 is a schematic illustration of the steering system;
Fig. 8 is a schematic illustration of the dolly chassis with a steering bracket accessory installed;
Fig. 9 is a section view of the steering angle corrector;
Fig. 10 is a top view thereof;
Fig. 11 is a side elevation view fragment in part section of a leg locking system;
Figs. 12A and 12B are geometric constructions of the steering correction provided by the corrector shown in Fig. 10;
Fig. 13 is a section view of a second embodiment of the steering corrector;
Fig. 14 is a section view of a third embodiment of the steering corrector;

Fig. 15 is an exploded perspective view of the corrector of Fig. 14;

Fig. 16 is a partial section view of an alternate embodiment of the steering corrector of Fig. 14;

Fig. 17 is a rear elevation view in part section showing the electronic shifter accessory attached to the camera dolly;

Fig. 18 is a bottom elevation view fragment also illustrating the electronic shifter attached to the camera dolly;

Fig. 19 is an enlarged bottom view fragment of the wheel angle position sensor;

Fig. 20 is a partially exploded perspective view of the electronic shifter housing;

Fig. 21 is a bottom elevation view of the electronic shifter mounted on the camera dolly, with the shifter housing cover removed;

Fig. 22A is an enlarged end view fragment taken along lines 22A-22A of Fig. 21;

Fig. 22B is an enlarged front elevation view fragment taken along line 22B-22B of Fig. 21;

Fig. 23 is an enlarged side elevation view fragment taken along line 23-23 of Fig. 21;

Fig. 24 is a flow chart illustrating the operation and control logic of the shifter;

Fig. 25 is a schematic drawing of the preferred shifter logic circuitry;

Fig. 26 is a schematic drawing of the preferred shifter drive circuitry;

Fig. 27 is a perspective view showing the installation of the electronic shifter onto the camera dolly;

Fig. 28 is a top elevation view of a steering bracket accessory attached to the dolly;

Fig. 29 is a partial section view thereof;

Fig. 30 is a side elevation view in part section of the pedestal as mounted on the dolly;

Fig. 31 is a side view fragment in part section of the column assembly of the pedestal;

Fig. 32 is a top view in part section of the column assembly with the structural shields removed;

Fig. 33 is a perspective view of the roller blocks shown in Fig. 32;

Fig. 34 is an enlarged section view fragment of the roller blocks shown in Fig. 32;

Fig. 35 is an enlarged section view fragment of the pedestal steering assembly;

Fig. 36 is a bottom perspective view of the pedestal supported by the dolly;

Fig. 37 is a perspective view of a structural shield positioned in between column sections of the pedestal;

Fig. 38 is an enlarged perspective view fragment of the column drive system mounted on the column;

Fig. 39 is an enlarged section view fragment of a column braking system; and

Fig. 40 is a section view taken along line 41-41 of Fig. 39;

Fig. 41 is a perspective view of the present telescoping steering drive column for connecting the steering wheel with the dolly steering system;

Fig. 42 is an enlarged top view thereof;

Fig. 43 is a front section view thereof;

Fig. 44 is a side section view thereof;

Fig. 45 is a front elevation view of the first segment of the column;

Fig. 46 is a side view thereof;

Fig. 47 is a front elevation view of the second segment of the column;

Fig. 48 is a side view thereof;

Fig. 49 is a front elevation view of the third segment of the column;

Fig. 50 is a side view thereof;

Fig. 51 is a front view of the fourth segment of the column;

Fig. 52 is a side view thereof;

Fig. 53 is a front elevation view of a cable loop;

Fig. 54 is a section view of a typical pulley; and

Fig. 55 is a perspective view of a typical spacer interposed between the column segments.

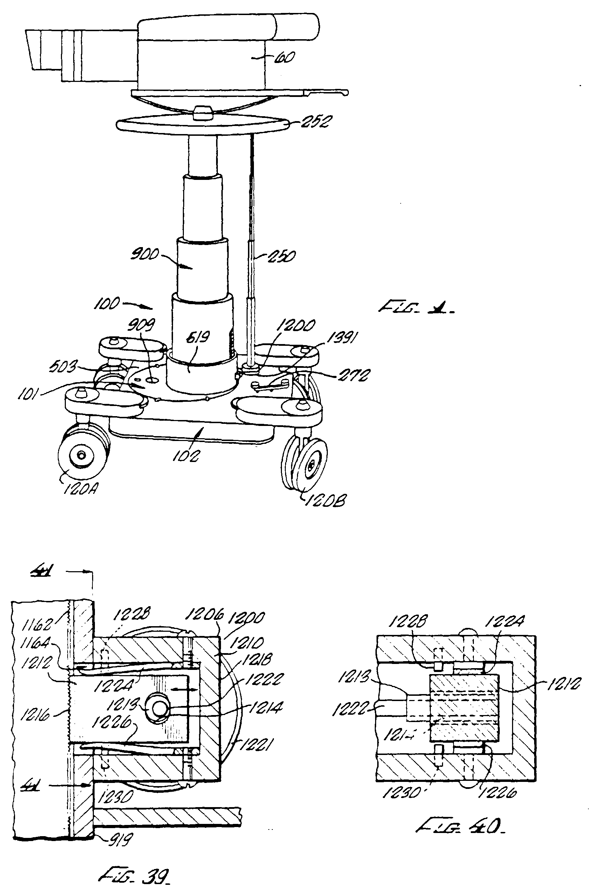

As shown in Figs. 1 and 1a, a television or motion picture camera 60 is mounted on to a dolly/pedestal unit 100 comprising a dolly 102 and a separable pedestal 101.

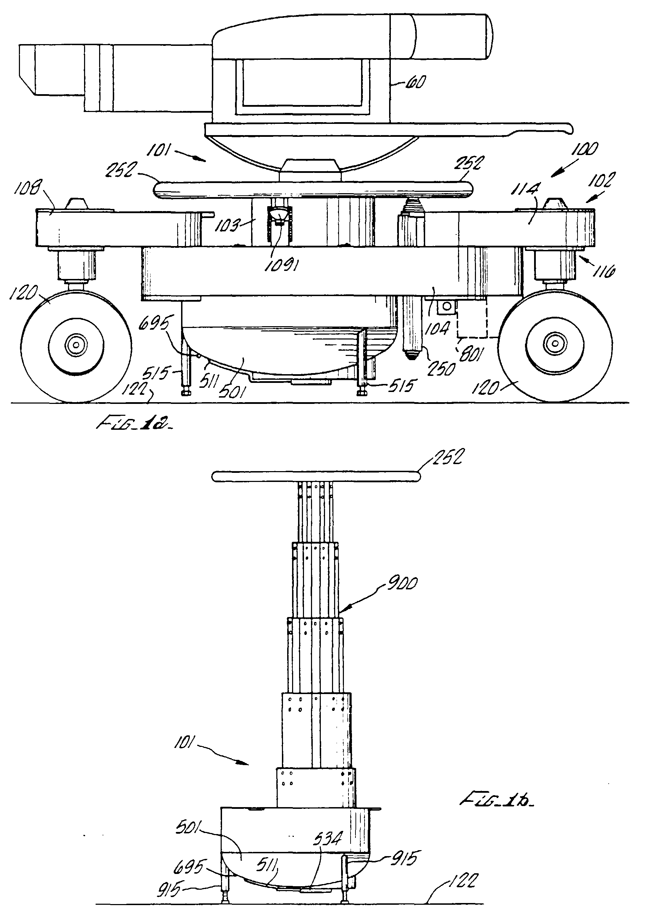

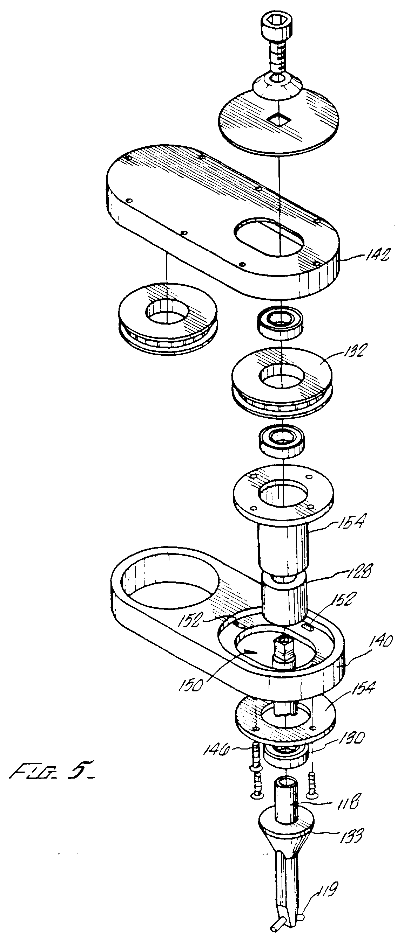

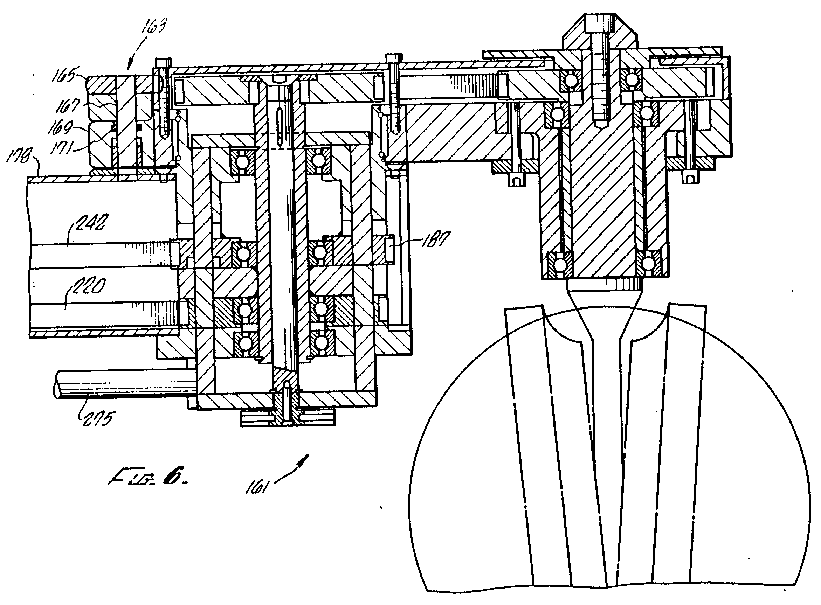

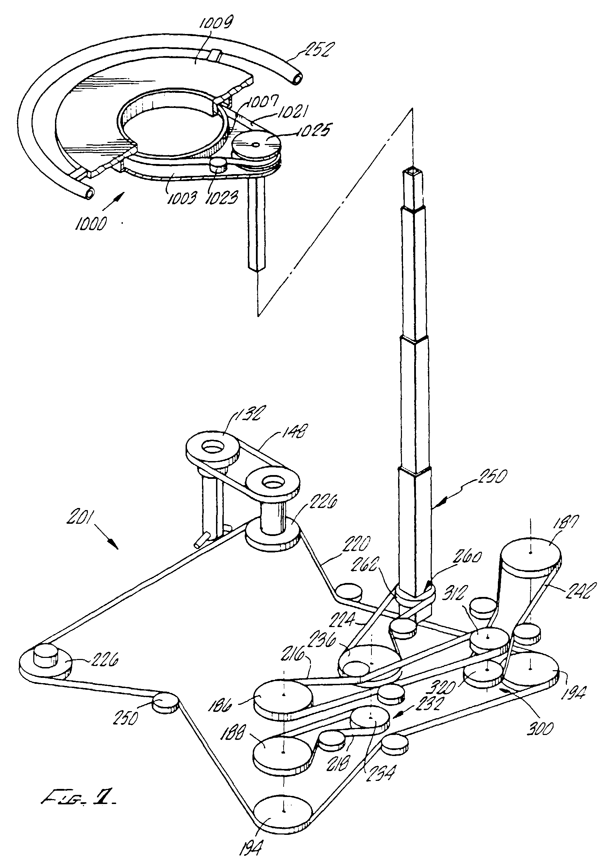

The dolly 102 includes a dolly chassis 104 having a generally round pedestal opening 106 (Figs. 2 and 8) extending through the dolly chassis 104 for receiving and supporting the pedestal 101. Three or four recessed mounting positions with threaded holes are provided around the opening 106 for accepting and securing the pedestal 101 into the dolly 102, while maintaining a generally flat dolly deck surface. Referring to Fig. 2, pivotally attached to the dolly chassis 104 are chassis legs, described herein as the front left leg 108; the front right leg 110; the rear right leg 112; and the rear left leg 114. The rear legs 112 and 114 can be pivoted on the dolly chassis 104 into leg positions A, B, and C. Similarly, the front legs 108 and 110 may be pivoted into leg positions D, E and F. Other leg positions may also be used.

With the rear dolly legs in position B and the front dolly legs in position D, the dolly is in the straight ahead or narrowest width dolly configuration. With the rear dolly legs in position C and the front dolly legs in position E, the dolly is in the track position, i.e., the dolly is configured to roll on standard track having 24.56 inch (62.38 cm) centers. With the rear dolly legs in position A and the front dolly legs in position F, the dolly is in a simulated three-point suspension configuration, i.e., the camera dolly approximates a tripod suspension.

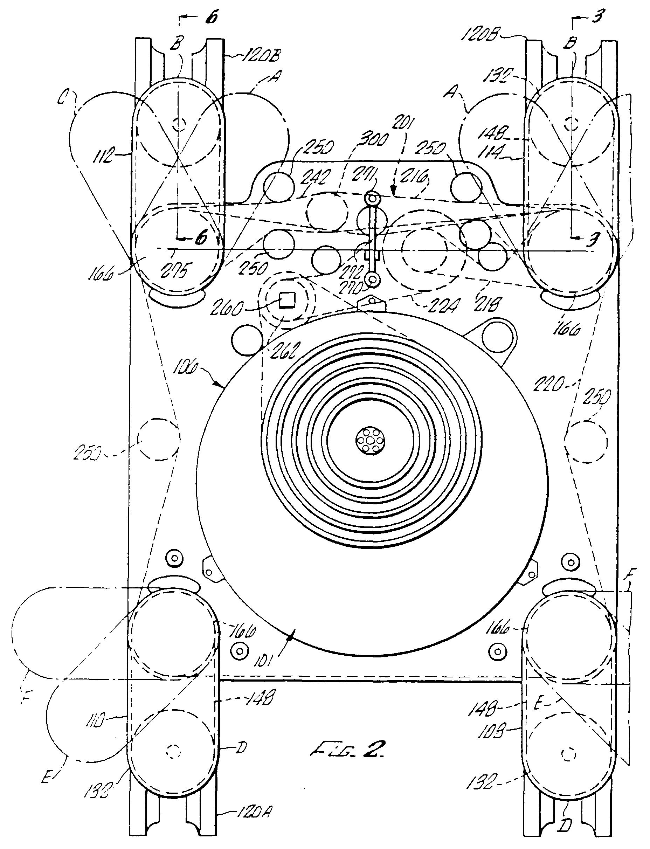

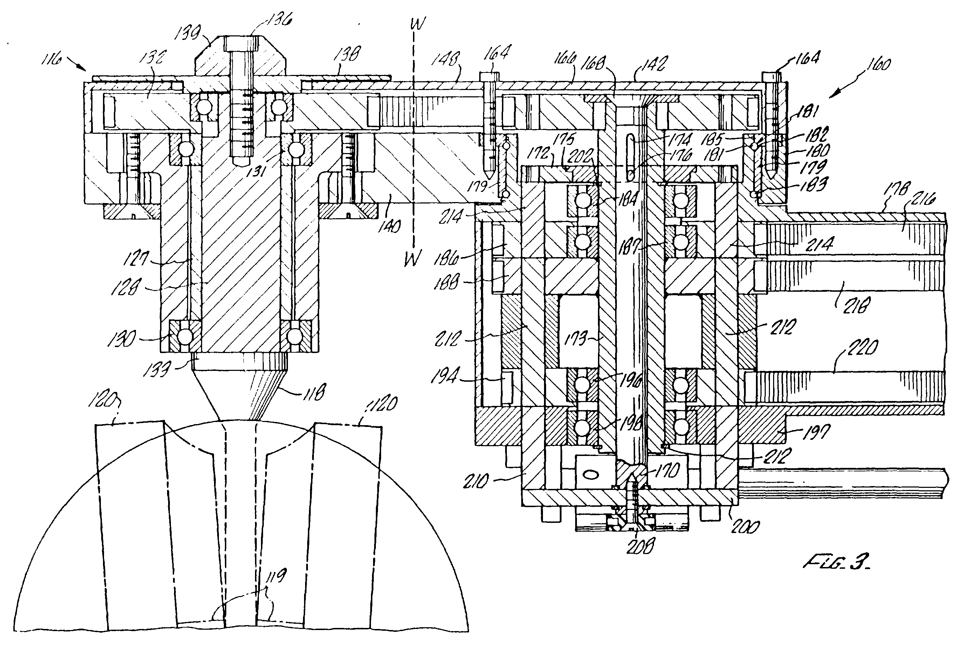

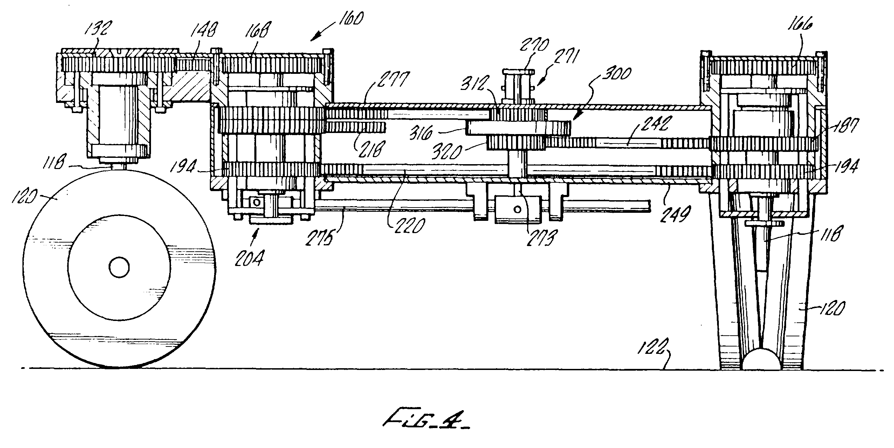

Referring to Fig. 3, the left rear-wheel king pin assembly 116 is described herein in detail. (The wheel king pin assembly 116 generally comprises the structure to the left of line W-W in Fig. 3). The other wheel assemblies on the dolly 102 will have similar construction. A king pin 118 includes axles 119 extending at a dihedral angle. Wheels 120 are rotatably mounted on the axles 119. The wheels 120 are configured to roll either on the ground 122 or on a standard industry track rail. A king pin shaft 128 extends through a king pin shaft bearing 130 supported by a king pin ferrule 133. A spacer sleeve 127 spaces apart bearings 130 and 131 separating the bearings slightly more than the housing shoulder dimensions. A king pin sprocket 132 is mounted over a king pin sprocket bearing 134 on the king pin shaft 128. A wheel assembly steering locking bolt 136, preferably a socket head cap screw, extends through a cover plate 138 into a threaded hole in the top end of the king pin shaft 128. Cap 139 bears upon the cover plate 138 held by the locking bolt 136. As shown in Fig. 5, orientation of the plate 138 and its rotation is determined by the square end of the shaft 128 and the corresponding square hole in the plate 138. When the locking bolt 136 is tightened into the king pin shaft 128 the cap 139 causes the cover plate 138 and king pin sprocket 132 to lock against and rotate with the king pin shaft 128. Locking bolt 136 is loosened to align the wheel assembly and then retightened.

To align the wheel assembly, the wheels are steered to a straight ahead position. The cover plate 138 has three grooves or markings corresponding to the three leg settings. With the locking bolt 136 loosened, the king pin 118 is turned to align the appropriate marking on the cover plate 138 with a reference mark on the upper leg frame 142. The locking bolt 136 is then retightened.

Each leg 108, 110, 112 and 114 comprises a lower leg frame 140 and an upper leg frame 142. As shown in Fig. 5, the lower leg frame 140 has an elongated or oval opening 150 and slotted holes 152 for securing the king pin armature 154 to the lower leg frame 140. The slotted holes 152 allow the king pin armature 154 to be slidably positioned to adjust the appropriate tension in the leg belt 148. The king pin ferrule 133 is clamped into position using clamping bolts 146 after the position of the king pin ferrule 133 has been adjusted for proper tensioning of the leg belts, e.g. belt 148. Spacer sleeve 127 is of correct length to prevent the alignment clamping forces to be placed on the bearing balls thus preventing added friction.

As shown in Fig. 3, in a left shift assembly 160, the upper leg frame 142 is secured to an outer bearing frame 180 by bolts 164 internally lined with a hardened sleeve 179. Within the left steering shift assembly 160 is a leg drive sprocket 166 linked by belt 148 to the king pin sprocket 132 (See Fig. 2 also). A cap screw 168 secures the leg drive sprocket 166 to a tubular axle 173 extending substantially vertically throughout the steering shift assembly 160. Dowel pins 143 finalize the attachment. An upper plate 172 is vertically slidable by way of a slot 174 on the shaft 170 by a pin 176.

A hardened inner bearing frame 178 pivotally supports the leg 114 (and legs 108, 110, and 112) on the dolly chassis 104. The outer bearing frame 180 with the hardened sleeve 179 is fitted over the inner bearing frame 178 to form the bearing to pivotally mount the legs 114. Balls 182 are positioned within upper and lower annular openings 181 and 183 formed by the inner bearing frames 178 and the hardened sleeve 179 on the outer bearing frame 180.

Since the outer bearing frame 180 is a structural member of the dolly, the shift assembly 160 can be made lightweight and compact. Seals 185 maintain lubricant within the bearings and keep contaminants out.

Referring still to Fig. 3, a conventional steering sprocket 186 is rotatably mounted on the axle 173 by a bearing 187. Similarly, a crab sprocket 194 is rotatably mounted on the axle 173 by crab sprocket bearings 196. A shaft drive sprocket 188 is irrotatably mounted on and fixed to the axle 173. A drive sleeve 189 is welded to the drive sprocket 188, to the crab sprocket 194, or the sleeve 189 and sprockets 188 and 194 can be a single piece unit. Plate bearings 184 and 198 support the axle 173 within the inner bearing frame 178 and lower support plate 197. Retaining rings 202 secure the axle 173 vertically within the shift assembly 160 on the inner races of bearings 198 and 184. A lower plate 200 is secured to the lower end of the shaft 170 by cap screw 208. Lower shift pins 210 resting against the lower plate 200 extend through the lower support 197 and butt against middle shift pins 212 which extend through holes in the crab steering sprocket 194 and drive sprocket 188. Upper shift pins 214 rest against the middle shift pins 212 and extend through the conventional steering drive sprocket 186. The upper ends of the upper shift pins 214 are secured to the upper plate 172 which can rotate on a disc 175 that is secured to axle 173 by a pin 176. The shift pins 210, 212 and 214 preferably have tapered ends so that they can drive into and align the sprockets even when the holes in the sprockets are not yet perfectly aligned. This provides a larger "shifting window" in time, for shifting steering modes. As shown in Fig. 3, 2 sets of shift pins are provided 180° apart.

A pivoting fork shift assembly 204 allows the lower plate 200 to be shifted from a lower or crab steering position (as shown in Fig. 3) wherein the middle shift pins 212 cause the drive sprocket 188 to be mechanically linked to the crab steering sprocket 194 -- to implement crab steering; to a second or conventional steering position wherein the lower plate 200 is shifted upwardly such that the crab sprocket 194 is mechanically linked to the fixed lower support 197 by the lower shift pins 210, and wherein the middle shift pins 212 cause the drive sprocket 188 to link up with and rotate with the conventional steering sprocket 186 -- to implement conventional steering. Thus, with the shift assembly 160 shifted into the crab steering mode, the drive sprocket 188 turns with the crab sprocket 194, while the conventional steering sprocket 186 remains fixed. On the other hand, with the shift assembly 160 shifted into the conventional steering mode, the crab sprocket 194 remains fixed while the conventional steering sprocket 186 rotates with and is driven by the drive sprocket 188. Poke holes 215 through sprocket 166 and plate 172 allow the shift pins to be pushed out of the shift assembly 160 during maintenance.

As shown in Fig. 6, a second or right side steering shift assembly 161 is provided at the right rear of the dolly 102. However, this shift assembly 161, although similar to shift assembly 160, does not include a shaft drive sprocket 188.

The front legs 108 and 110 do not include or require any steering shift mechanism or a conventional steering drive sprocket, since the front wheels of the dolly are either in a fixed "straight ahead" position or are engaged in the crab steering mode. The front wheels of the dolly do not require or perform conventional steering correction as do the rear wheels. Referring to Figs. 3 and 4, the dolly 102 can be shifted from conventional steering to crab steering and vice versa by actuation of a shift rocker 272 having knobs 270 and 271. With the shift knob 270 in the "up" position as shown in Fig. 4, the lower plate 200 in both the left and right shift assemblies 160 and 161 are in the lower or crab position such that the conventional steering sprockets 186 and 187 are deactivated and the crab sprockets 194 and 195 are driven by the steering system 201. With the shift knob 271 in the "up" position, the plates 200 in the shift assemblies 160 and 161 are displaced upwardly such that the crab sprockets 194 and 195 are deactivated and the conventional steering sprockets 186 and 187 come into play.

As shown in Fig. 4, the conventional shift knob 270 and the crab shift knob 271 are on the rocker 272 linked to an extension shaft 273 extending through the dolly chassis to an arm linkage joined to a pivot shaft 275. The ends of the pivot shaft 275 are attached to a fork assembly 204 at the left and right shift assemblies 160 and 161. The fork assemblies 204 are pivotally joined to the (vertical) shafts 170 in the shift assemblies 160 and 161. Consequently angular rotation of the shaft 275 causes the vertical shafts 170 to shift between conventional and crab steering modes. As shown in Fig. 2, the shaft 275 is positioned between the crab and conventional steering knobs 271 and 270. As one knob is depressed, the other is raised on the rocker 272 fixed to the top deck, as the dolly is shifted between conventional and crab modes. The rocker is preferably operated by foot.

Thus, the steering shift assembly 160 and 161 allows the dolly 102 to be shifted from conventional steering, i.e., wherein the front wheels of the dolly would remain fixed in a "straight ahead" position with the rear wheels performing the steering, to a crab steering mode wherein all wheels remain parallel to each other and in the same direction, such that the dolly can "crab".

Figures 2 and 7 illustrate the steering system 201 of the dolly unit 102. As shown therein, the crab belt 220 continuously loops around and drivingly engages the crab sprockets 194 and front chassis sprockets 226, all of which are contained within the dolly chassis 104. The front chassis sprockets 226 are fixed to a shaft which drives the drive sprockets 106 in the front legs 108 and 110. Idler pulleys 250 are provided along the sides of the chassis for tensioning the crab belt 220. All of the belts in the steering system 201 are toothed rubber belts and have a flat back surface, such as Gates Rubber Co. POLYCHAIN GT belts.

A primary sprocket 262 has a through square receptacle 260 adopted to receive a telescoping steering drive shaft 250 linked to the steering assembly of the pedestal, as further described below. A first ratio belt 224 drivably connects the primary sprocket 262 to an outer or second sprocket 236 on a two stage idler 232. A first or inner sprocket 234 of the two stage idler 232 is linked by the drive belt 218 to the shaft drive sprocket 188, as shown in Fig. 3. The conventional steering sprocket 186 is connected by the left conventional steering belt 216 to a steering corrector unit 300, and specifically to a first sprocket 312 on the corrector 300. A second sprocket 320 on the corrector 300 is linked by a right side conventional steering belt 242 to a right side conventional steering sprocket 187 within a right side shift assembly 161, as shown in Fig. 6. Idler pulleys are provided as shown in Fig. 2 to provide proper belt tensioning and for alignment purposes during manufacture or maintenance.

The sprockets in the steering system are selected so that the wheels 120 of the dolly will move directly and with the same turning angle as the steering wheel 252 on the pedestal. These ratios can be achieved by using 8M22 sprockets for sprockets 262, 234, 312, and 320; 8M40 sprockets for sprockets 132, 166, 226 and 194; 8M44 sprockets for sprockets 186, 188 and 236 are also available from Gates Rubber Co. (the last 2 digits indicating the number of sprocket teeth). The initial drive reduction is $112 \div 28 = 4$. The corresponding drive increase is $(44 \div 22) (2) = 4$. The ratio between the steering wheel and the wheels, therefor, is 1 to 1. These sprockets can be machined down in height to maintain a compact and streamlined dolly chassis. Use of these sprockets with the Gates POLYCHAIN GT belts provides for exceptionally precise movement and handling of the steering system 201 which is very noticeable and desirable to the dolly grip or user. This steering system is also very quiet in operation permitting it to be freely used on sound stages without interfering with the audio aspects of television or motion picture production. Although the present embodiment uses toothed belts, chains, if made suitably quiet, could also be used.

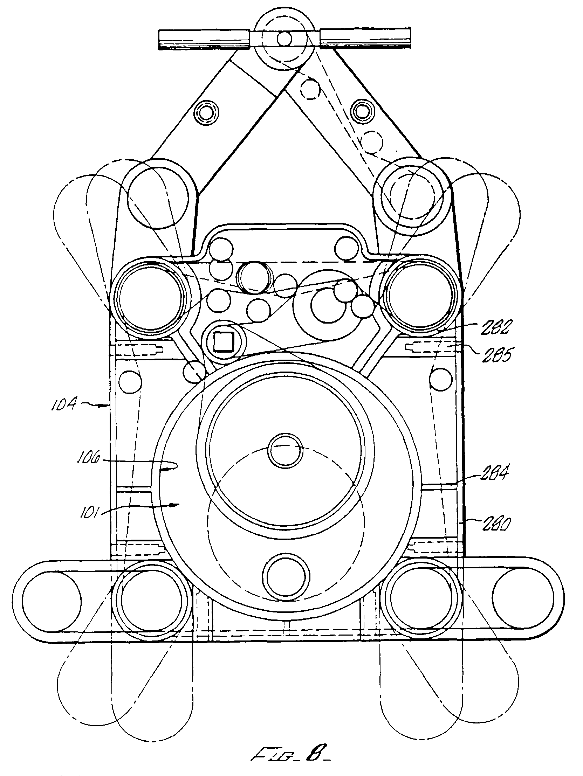

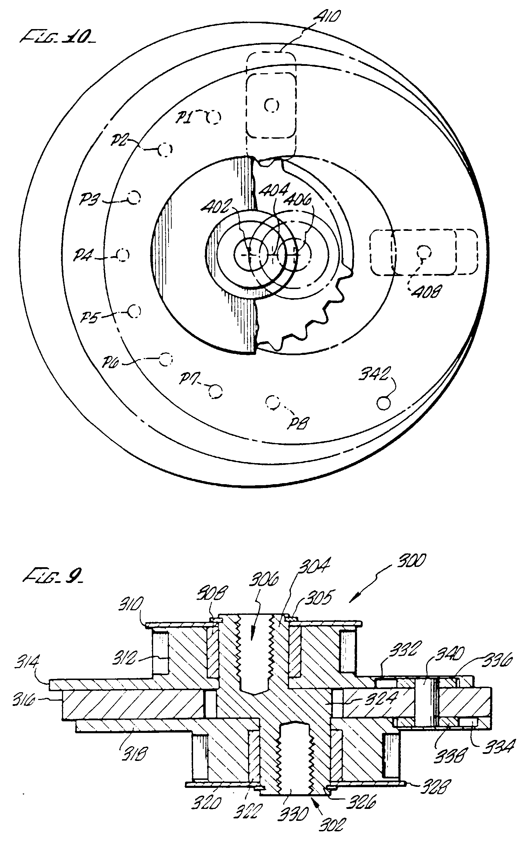

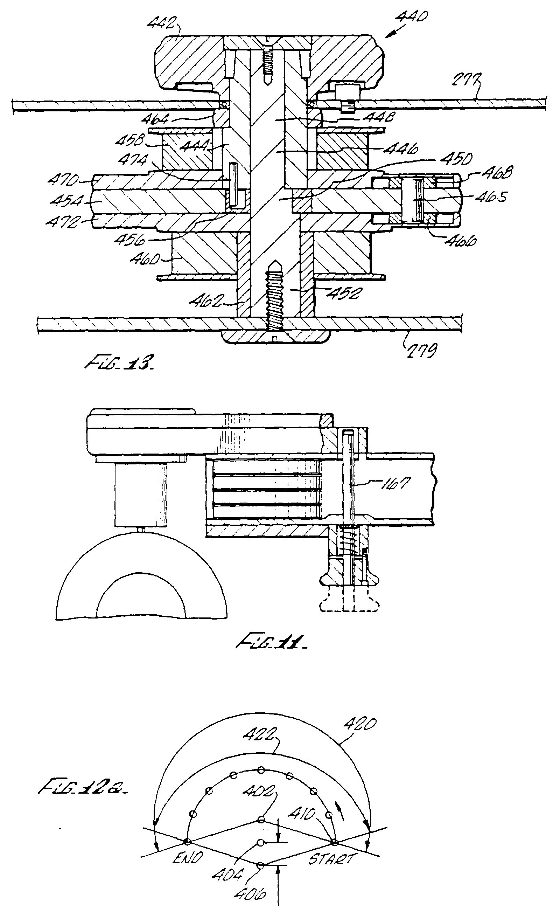

A leg locking pin system 163 is provided for each leg to lock the leg into its selected position. As shown in Fig. 6, a crescent shaped handle 165 is joined to a pin 167 in a pin frame 169. A bushing or O-ring 171 in the frame 169 surrounds the pin 167 and provides damping to its movement. The pin 167 is releasably engageable through a bore in a flange of the hardened innerbearing frame 178 overlying the dolly chassis. An alternative embodiment operated from underneath the dolly chassis is shown in Fig. 11.

As shown in Figs. 3, 4, 7 and 8, the dolly chassis may be made as generally square or rectangular weldment with removable tap and bottom plates 280 and 282 spaced apart by the frame 277, tubes 279, and ribs 284 (Fig. 8). Accessory pockets 285 are provided at the front and sides of the chassis to hold seats, platforms, pushbars, etc.

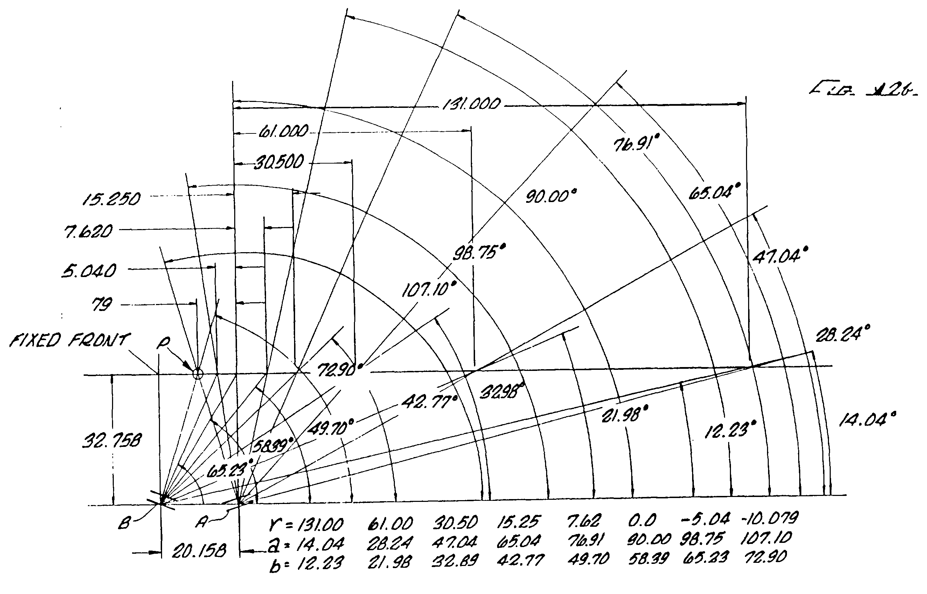

As is well known in the art, to achieve proper steering geometry with conventional steering, the rear wheels must be oriented so that their axes (i.e., a line perpendicular to the wheels and colinear with the axles) intersect at a point on a line passing through the centerlines of the front wheels. To the extent the rear wheels deviate from this geometry, rolling friction will be increased due to scrubbing of the wheels on the floor surface. This principle is illustrated schematically in Figure 12B which shows steering angle correction for the dolly 102 when the legs 108, 110, 112, and 114 are in front and rear leg positions E-B and F-A as shown in Figure 2. As shown in Figure 12B, the steering correction required in conventional steering of the rear wheels ranges from 0.0 when the dolly 102 is steered to move in a straight line, to a maximum 107.10° for the right rear wheel when the dolly is steered to pivot around point P in Figure 12B. The left and right rear wheels in Fig. 12B are designated by A and B. As shown, wheels B turn 72.9° to meet point P.

A steering corrector or transmission unit 300 sets the proper relative angles of the rear wheels to achieve proper steering geometry. As shown in Fig. 9, the corrector unit 300 includes an eccentric hardened shaft 302 having an upper or first shaft section 304, a central section 324 and a lower or second shaft section 326 offset from the first shaft section 304. A threaded bore 306 extends into the first shaft section 304. Correspondingly, a threaded bore 330 extends into the second shaft section 326. A top sprocket 312 is rotatably mounted onto the first shaft section 304 through a needle bearing 308. A belt flange 310 is integral with the top sprocket 312 and the top sprocket is held onto the first shaft section 304 by a snap ring 305. A top plate section 314 is rigidly attached to or integral with the top sprocket 312. Similarly, a bottom sprocket 320, of the same size and pitch as the top sprocket 312 is rotatably mounted on the second shaft section 326 by a bearing 322. A belt flange 328 is integral with the bottom sprocket 320 which is held onto the second shaft section 326 by a snap ring 327. A lower plate 318 is rigidly attached to or integral with the bottom sprocket 320. A correction disk 316 is rotatably mounted on the central section 324 of the eccentric shaft 302 on a Glacier DU bushing or suitable alternate and between the upper plate 314 and lover plate 318.

The top plate 314 section includes a radial slot 332 containing an upper dog plate 336. Similarly, the lower 318 has a radial slot 334 containing a lower dog plate 338. A pin 340 connects the upper dog plate 336 to the lower dog plate 338 through a bore in the disk 316. An alignment hole 342 passes through the plates 314 and 318, and disk 316. During factory assembly, a pin placed in the hole 342 maintaining alignment within the corrector 300 while it is being installed. When in the shifting position the pin 340 must be at 90° to a plane passing through the centerline of shafts 304 and 326. (90° to the position shown in Fig. 9 or perpendicular to the plane of the paper).

When installed in the steering and drive system 201, the eccentric shaft 302 is fixed to the dolly chassis 104 by screw fasteners passing through the dolly chassis 104 into the threaded bores 306 and 330. As the dolly is steered in the conventional steering mode, belt 216 turns the top sprocket 312 on the shaft 302 as shown in Figs. 2 and 9. The first sprocket 312 is linked to the second sprocket 320 through the interaction of the disk 316 and the interlinked sliding dogs 336 and 338. The geometry of the corrector 300 causes the second sprocket 320 to turn through a "corrected angle" with respect to the first sprocket 312. Correspondingly, the second sprocket 320 drives the right side conventional steering belt 242, thereby driving the sprockets in the right rear leg 112 and causing the right rear wheels to be steered to the proper conventional steering angle. The corrector 300 operates continuously, i.e., it sets very accurate corrected steering regardless of wheel position. If the steering wheel 252 is turned 180°, 360° or through any angle, the corrector 300 uniformly maintains the appropriate conventional steering angles. In addition, testing shows the correction provided by the corrector 300 to be so accurate (in the straight ahead leg configuration and 3-point configuration) that any "misalignment" of the rear wheels in conventional steering is so slight as to be beyond human perception.

In Fig. 10, 402 represents the axis of the first section 304, 404 represents the axis of the central section 324, and 406 represents the axis of the third section 326 of the shaft 302. 408 is shown 90° to the alignment position. With the sprockets and disk oriented to the position 410 in Fig. 10, there is 0 correction, i.e. the wheels are straight ahead (the shifting position). Positions P1-P8 in Fig. 10 corresponds to the angular movements shown in Fig. 12A and 12B.

Referring to Fig. 12A, the correspondence of the centers of rotation 406, 404 and 402 are graphically represented. The arc 420 sweeps through 214.238°, i.e., this is the angle of rotation of the top sprocket 312 about its center of rotation 402, at maximum correction. This corresponds to a king pin angle of rotation of the wheels of 107.10°, due to the 2:1 ratio of the sprocket sizes between the corrected sprockets and the conventional steering sprockets 186 and 187. The lower sprocket 320 which rotates about axis 406, for the same movement, sweeps through arc 422 comprising an angle of 145.093°, again from start or 0 correction to maximum correction. This movement of the lower sprocket 320 turns the right rear wheels to an angle of 72.90°, again one half of the amount of rotation of the sprocket 320 due to the sprocket drive ratios. These numbers correspond to a corrector offset of .231 in. Other offset values can be selected for various wheel base combinations. Fig. 12B also shows the relationships of the intermediate wheel positions designated in Figs. 10 and 12A. Of course, the corrector 300 operates continuously to correct steering regardless of the increments shown or steering angle. The angles selected in Figs. 8 and 12 are examples selected for illustration purposes.

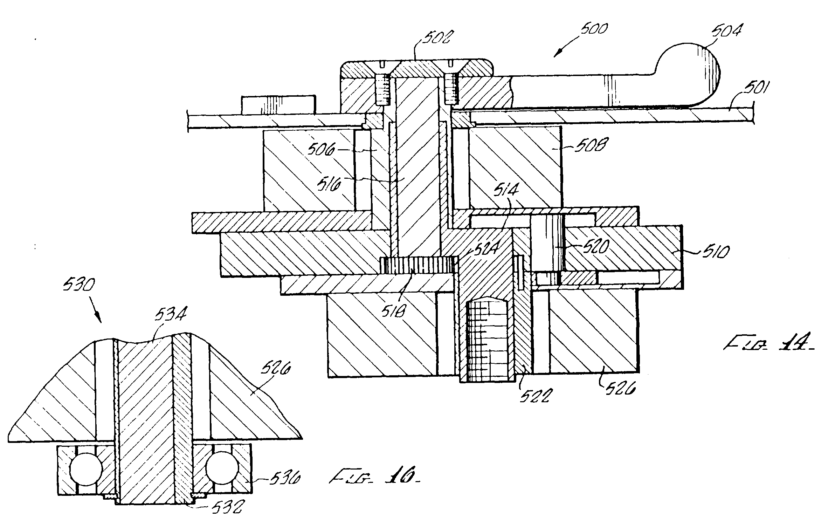

The corrector 300 shown in Fig. 9 does not provide exact correction for conventional steering when the legs are in the track position. Shown in Fig. 13 is an alternative embodiment of the corrector 300 which is adjustable to provide proper steering correction for all leg configurations. Referring to Fig. 13, an adjustable steering corrector 440 has a knob 442 on top of the dolly chassis. A shaft 446 has a first section 448, a central section 450 and a second section 452 offset from the central and first shaft sections. An eccentric drive collar 444 is rotatably mounted on the first shaft section 448. A central plate 454 is fixed to a floating hub 456 which is rotatably mounted onto the central shaft section 450. A top sprocket 458 is rotatably positioned over the eccentric drive collar 444. A bottom sprocket 460 is rotatably mounted on the lower shaft section 452. Upper and lower spacers 464 and 462 secure the corrector 440 within the dolly chassis. A pin 465 interconnects sliding dogs 466 and 468 which are radially slidable in slots in the plate sections 470 and 472 of the upper and lower sprockets 458 and 460. A collar pin 474 extends from the eccentric drive collar 444 into the floating hub 456. By turning the knob 442, the amount of offset between the axis of rotation of the sprockets 458 and 460 is changed from an amount suitable for correcting steering in the 3-point simulation and straight ahead positions, to correcting steering for the track position. Accordingly, proper steering correction can be implemented in any of the three dolly leg configurations by turning the knob 442 on the corrector 440 to select the appropriate selection mode of the corrector 440.

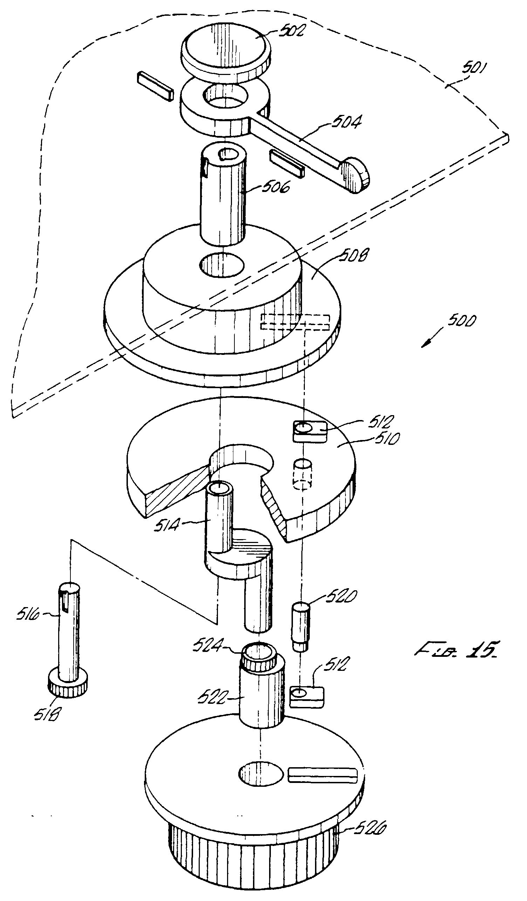

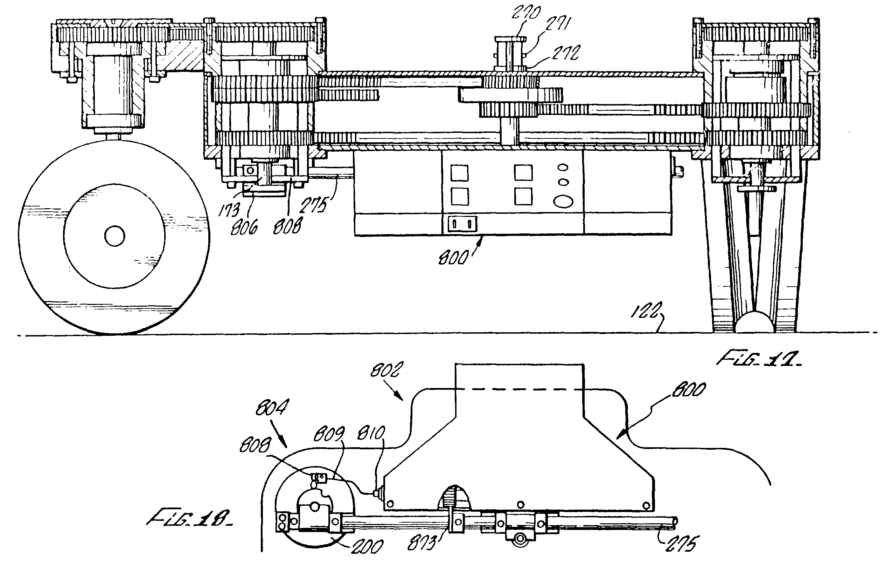

Another adjustable steering corrector 500 is shown in Figs. 14 and 15. The top cap 502 and hand lever 504 of the steering corrector 500 are above the top deck 277 of the dolly chassis. The hand lever 504 is pinned to a top cam 506 which passes through a top sprocket 508 on a hub 514. A gear post 516 having a spur gear 518 at its lower end passes through the hollow hub 514 and is attached to and turns with the lever 504 and top cam 506. A bottom cam 522 has a spur gear 524 attached at its upper end. The bottom cam 522 is positioned within a lower sprocket 526 on the hub 514. The steering corrector 500 has a disc 510 and sliding dogs 512 connected by a pin 520, similar to the correctors shown in Figs. 9 and 13. The principle of operation of the corrector 500 is also similar to the operation of the correctors shown in Figs. 9 and 13. However, in contrast to the adjustable corrector 440 shown in Fig. 13, the corrector 500 shown in Figs. 14 and 15, by virtue of the cam and spur gear arrangement, achieves twice the offset since movement of the hand lover 504 causes both the top sprocket 508 and the lower sprocket 526 to move apart. This provides for a wider range of steering correction geometry within a compact size. In the preferred embodiment, corrector 500 corrects the offsets from .204 in. to .310 in. (axle centerline separation is .408 in. to .620 in.)

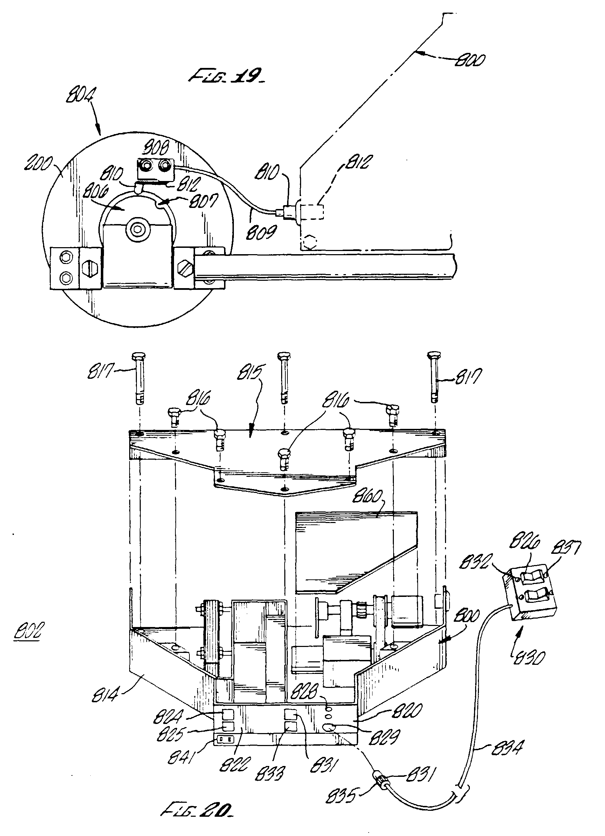

Fig. 16 shows a steering corrector 530 identical to the steering corrector 500 in Fig. 14, except for the design and mounting of the lower end. As shown in Fig. 16, steering corrector 530 has an extended bottom cam 532 and extended hub 534, with the extended bottom cam 532 secured within a bearing 536. The bearing 536 is rigidly mounted within the dolly chassis. As the lever 504 on the steering corrector 530 is shifted, there is no shifting of the lower sprocket 526. All movement due to the cam action occurs at the upper end of the transmission 530. The chassis top deck surrounding the transmission 530 is slotted (.212 in. in the preferred design). A bushing having a square outside shape is provided around the transmission 530 to guide the upper end of the transmission in the slotted chassis deck.

As shown in Fig. 1, the camera dolly 102 has steerable front wheels 120A and back wheels 120B. In Fig. 2, all four sets of wheels (and the legs as well as drawn in solid lines) are in the "straight ahead" position corresponding to wheel angles of 0° or 180°.

In the conventional steering mode, the front wheels 120A are secured in a straight ahead (0° or 180°) position, while the back wheels 120B are steered with the steering wheel 252. In crab steering mode, both the front wheels and back wheels are steered at the same angle, such that the camera support dolly can be steered and pushed laterally to the side, front or back, or at any desired angle, without changing the orientation of the camera 50.

Referring to Fig. 1, to use the crab and conventional steering shift rocker 272, the dolly operator or grip must physically depress either pedal with a hand or foot. When the steering system 201 of the camera dolly is to be shifted between crab and conventional steering, while the dolly is moving during a filming sequence, it can be difficult for the grip to actuate either steering shift pedal while simultaneously smoothly pushing or keeping up with the moving camera dolly. In addition, the steering system 201 can only be shifted between crab and conventional steering when the front and rear wheels are in the straight ahead (0° or 180°) position. This makes the dolly grip's objective of smoothly shifting the moving dolly between steering modes more difficult.

The front sets of wheels will always be properly aligned for shifting since in crab mode their steering angle always matches that of the rear wheels. Thus, when the rear wheels are straight ahead, the front wheels will also be positioned straight ahead. In conventional steering mode, the front wheels are always aligned straight ahead.

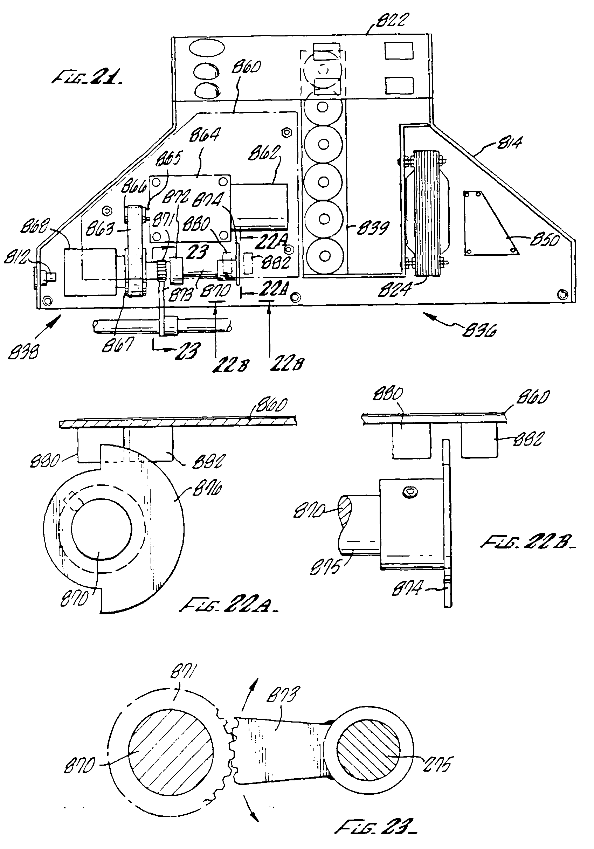

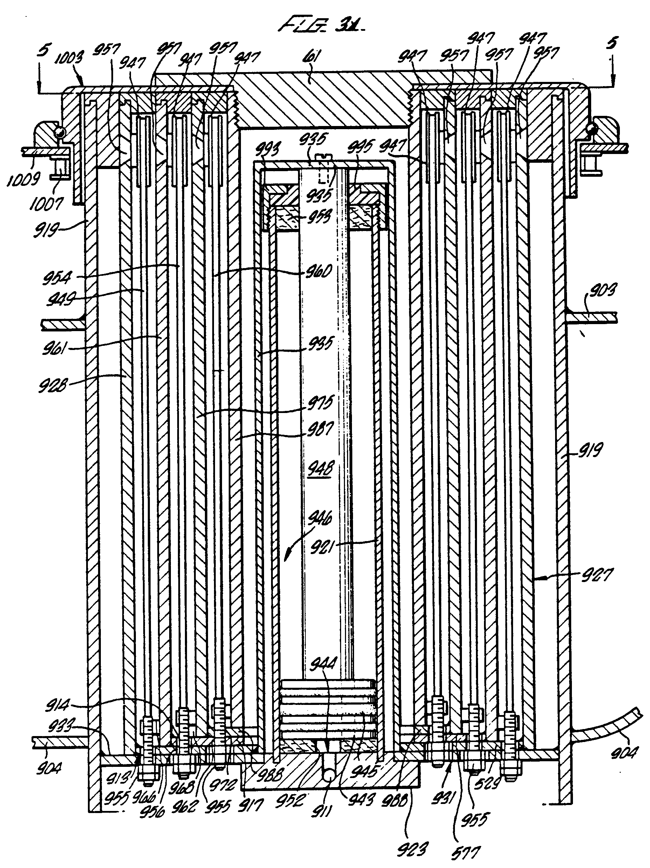

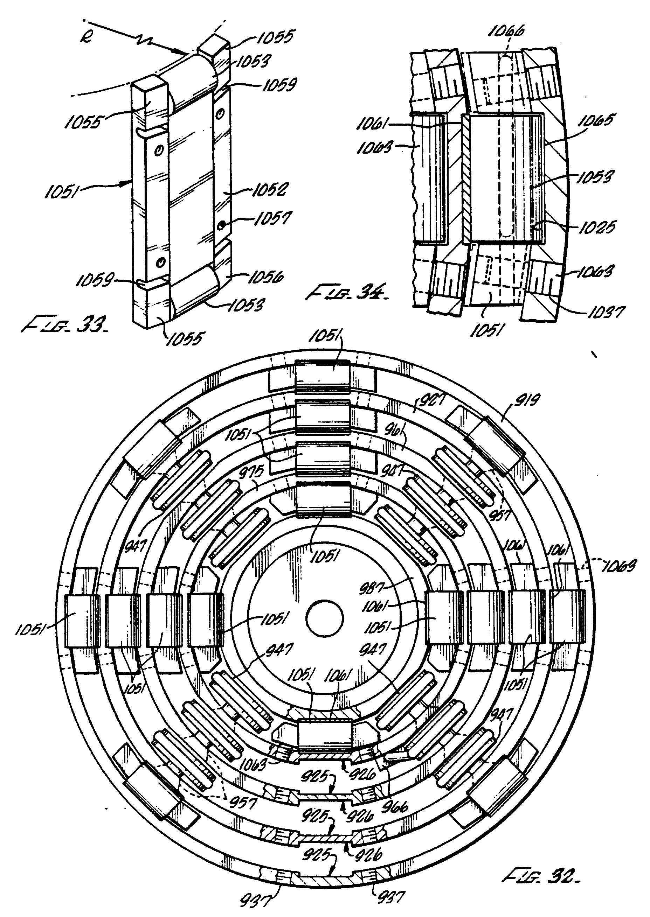

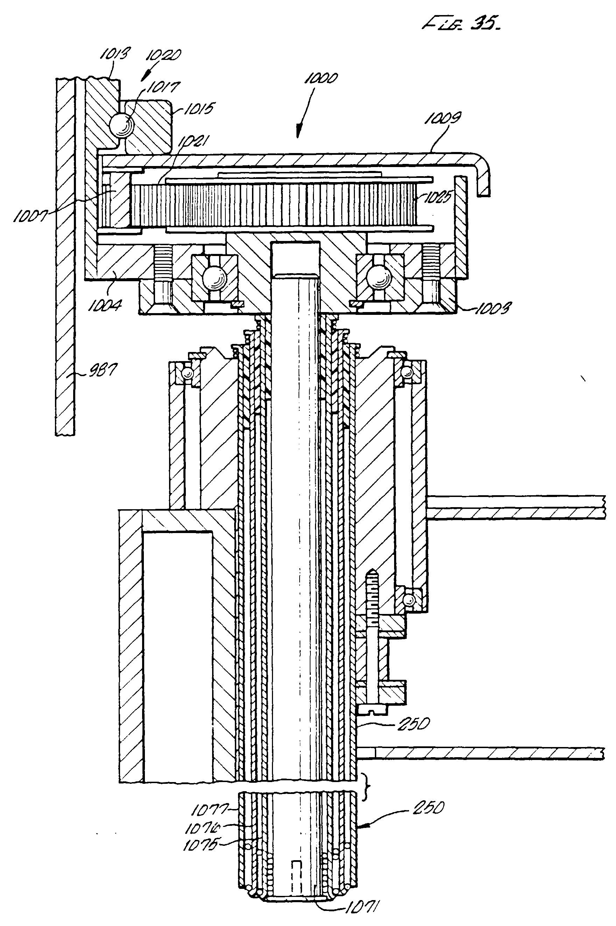

As shown in Figs. 17 and 27, an electronic shifter 800 is provided preferably as an accessory attached to the underside 802 of the camera dolly, to automatically shift the steering system 201 of the camera dolly between conventional and crab steering modes without hand or foot actuation of the shift knobs or pedals.

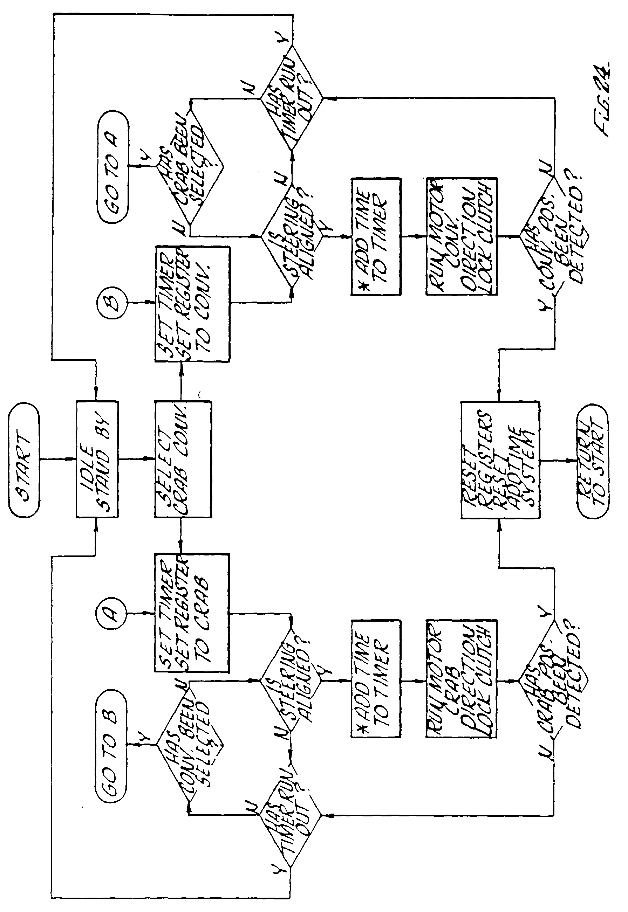

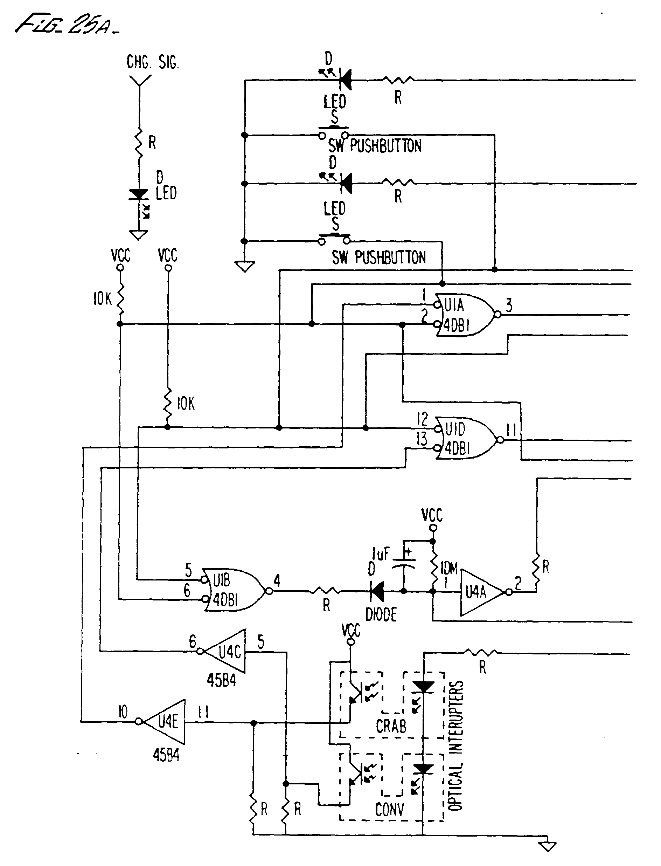

Referring to Figs. 18 and 19, to detect when the rear camera dolly wheels are in the 0 or 180° position, (i.e., in a shiftable position) a shiftable position angle detector system 804 is provided. A notch plate 806 having notches 807 on opposite sides thereof is secured at the bottom of the rear left tubular axle 173. The bearing support or housing 197 supports the ale 173 and related components in position. A switch 808 having a roller 810 at the end of an arm 812 is attached to the stationary housing 197. The roller 810 rolls on the outer circumference of the notch plate 806. The notch plate turns as the wheels are steered through the steering system. The switch 808 is linked through a cable 809 and connector 810 to a connector receptacle 812 in the shifter 800.

Only the rear left wheel position need be monitored for a shiftable position (0 or 180°) because when the rear left wheel is at 0 or 180°, due to the design of the steering system 201, the rear right wheel (or pair of wheels) will necessarily also be in a like position.

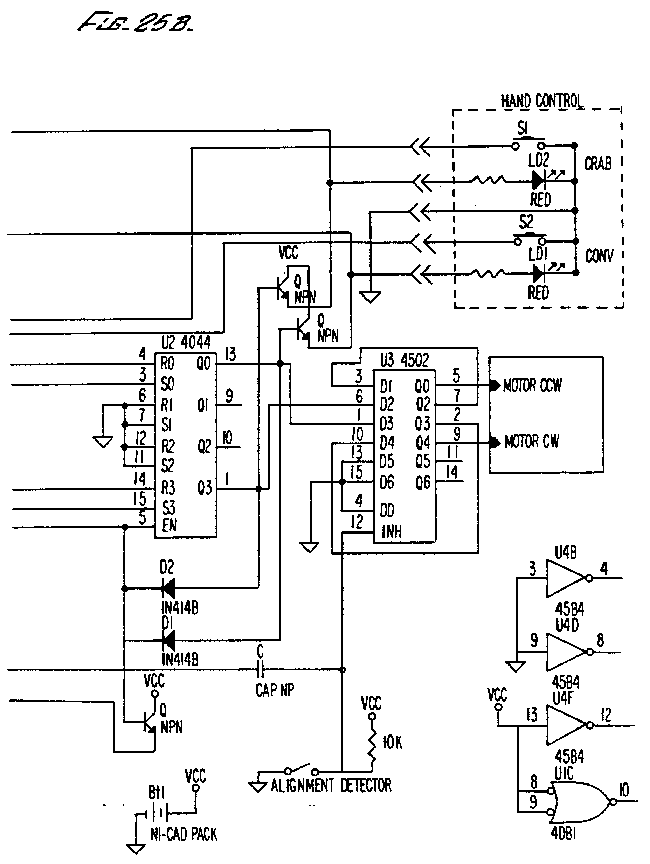

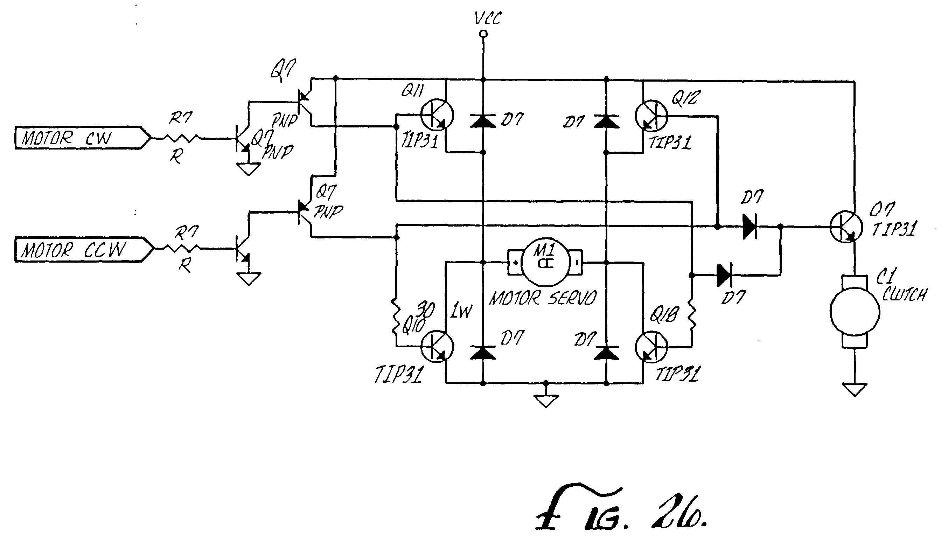

Referring to Figs. 20 and 21, the electronic shifter 800 has a removable cover 815 held to a housing 814 with screws 816. As shown in Figs. 17 and 27, the shifter is mounted underneath the camera dolly with the cover 815 facing the floor or ground surface 122. Mounting pins 821 extending from the back of the housing 814 slide into and engage mounting holes 823 in bearing blocks 825 attached to the dolly lower surface 402. A single attachment bolt 827 engages a mounting block 829 adjacent the back edge of the dolly lower surface 802. Thus the shifter can be installed onto the dolly with a single bolt 827 without lifting or tilting the dolly. Alternatively, a thumbscrew, wingbolt or other hand fastener can be used so that the shifter 800 can be installed without using any tool.

Referring still to Figs. 20 and 27, the shifter 800 has an angular up-facing front panel 820 having a crab steering mode selection switch 824, and a conventional steering mode selection switch 825. Indicator lights 831 and 833 alongside the crab and conventional steering mode selection switches 824 and 825 indicate the steering mode into which the steering system has been switched. The panel face is inclined upwardly at an angle to allow the dolly operator to easily view the panel while operating the dolly. The panel 820 also has a battery charging indicator light 828 and a connector 829. A remote hand control 830 (Fig. 20) has a steering mode selector switch 826 and indicator lights 832 and 837, similar to indicator lights 831 and 833. A cable 834 connects the remote hand control 830 to the shifter 800 through a connector plug 835 which engages connector 829 on the switch panel.

An alternate embodiment of the shifter 800 also includes controls and indicators for a column drive system and/or a column braking system as described below.

As shown in Fig. 21, the shifter 800 is generally divided into a power supply section 836 and a shift control section 838. The power supply section 836 includes a battery pack 839 preferably using 10 sub c-cells hooked in series and having a capacity of 900mA hours, or other suitable battery source. A separate A/C line cord is connected to a socket on the flat panel of the shifter 800 for charging. The socket 835 is wired to a transformer 842 which in turn is connected to a power supply circuit board 850. A 110/220 volt switch may be provided to facilitate charging the battery pack using either source.

On the other side of the shifter 800, as shown in Figs. 20 and 21, is a shift control circuit board 860. A D/C motor 862 drives a sprocket 866 on an output shaft 865 through a gear reduction box 864. The D/C motor 862 is preferably a 24 watt, 12V DC motor running from 100-200 RPM, with the gear reduction box 864 providing a 43:1 reduction. The gear box and motor are advantageously mechanically isolated from the housing to lessen vibration. A belt 863 links sprocket 866 to a clutch sprocket 867 on an electrically controlled clutch 868. The clutch 868 is in turn linked to a drive shaft 870 having a drive gear 871. A bearing block 872 supports the drive shaft 870 adjacent to the drive gear 871. A gear segment 873 is attached to the shift bar 275 of the steering system of the camera dolly. The gear segment 873 extends through a slot in the housing cover and engages the drive gear 871.

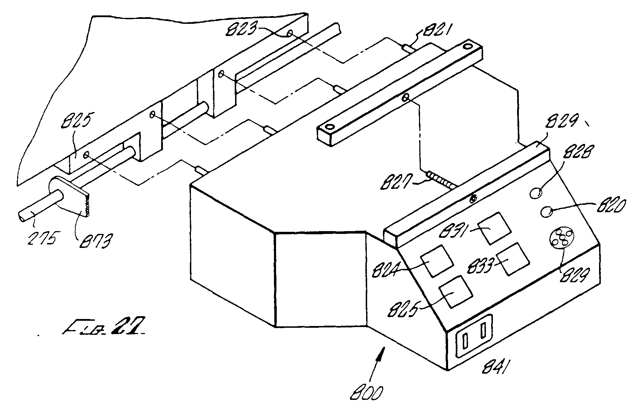

At the end of the drive shaft 870 opposite to the clutch 868 is a detector plate 874 having a hub 875 attached to the drive shaft 870 by a set screw, as shown in Figs. 22A and 22B. A sector flange 876 extends from the hub 875. Optical interrupter detectors 880 and 882 attached to the shift control circuit board 860 project downwardly on either side of the detector plate 874, to detect whether the extended sector flange 876 of the detector plate is positioned in between the optical detectors, to thereby determine the steering mode of the steering system and to control the amount of rotation of shaft 870.

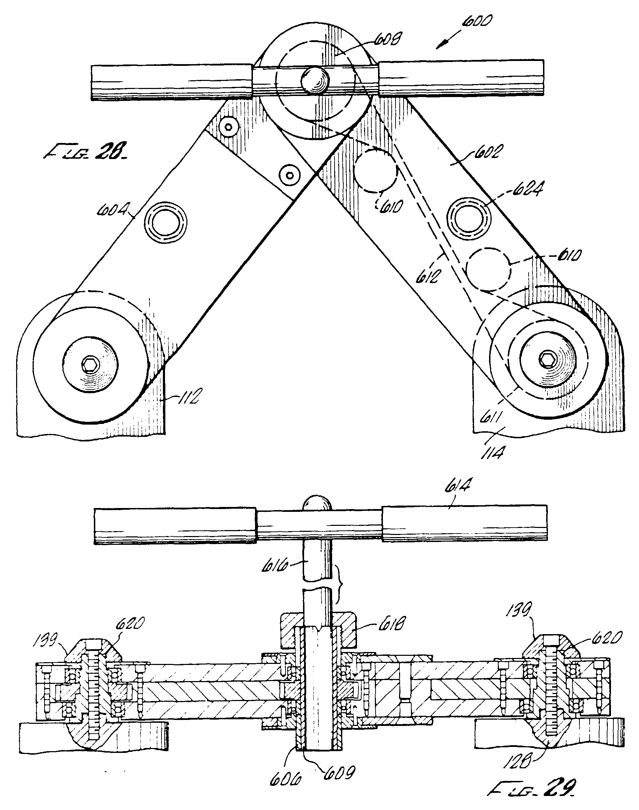

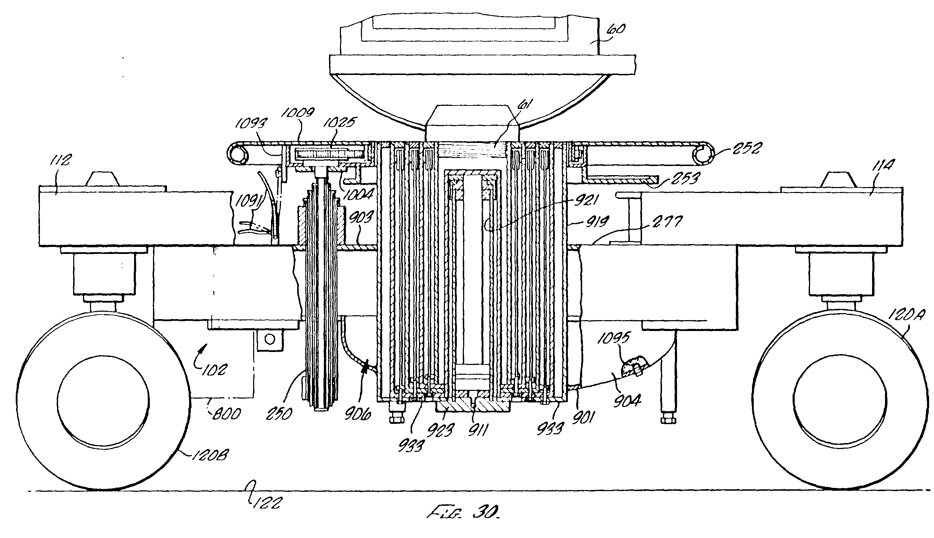

Figs. 25 and 26 schematically illustrate the shift control circuit board 860, and the connections to the motor and clutch. The power supply circuit board 850 provides the voltages as required by the circuitry of Figs. 25 and 26.

Fig. 24 is a flow chart illustrating the logic of the control circuitry of Fig. 25. If conventional steering is selected, i.e., by pressing the conventional steering mode selection switch 824, or by use of the remote hand control 830, the timer on the control circuit board 860 is set and the register U2 set to conventional steering. Next, the circuitry determines whether the steering is aligned into a shiftable position, i.e. to a 0 or 180° position. This information is provided by the wheel angle detector 804 which is linked to the control circuit board 860 through cable 809. Specifically, switch 808 is closed and provides a positive enable condition only when the roller 810 protrudes into one of the notches 807 on the notch plate 806. If the timer runs out before the wheels are brought into a shiftable position, the system returns to idle standby. The timer is preferably set approximately 12 seconds. If the dolly wheels are not aligned within that period, generally a steering mode shift would no longer be desired.

If the wheels are aligned into a shiftable position, a shift will take place and additional time is added to the timer to prevent an inadvertent return to idle standby during the shift sequence. The clutch is electrically locked and the motor is run in the conventional steering direction. Referring to Figs. 21-23, the drive shaft 870 rotates causing the shift bar 275 to also rotate in an opposite sense, thereby shifting the steering system from crab to conventional steering mode. The motor continues to run until the conventional steering optical interrupter 880 detects that the shaft 870 has moved into the conventional steering mode position. The shifter 800 similarly shifts from conventional steering mode to crab steering mode following the sequence illustrated on the left side of Fig. 24.

The shifter 800 permits the dolly grip to shift between steering modes, e.g., using the remote hand control, without leaving his location. In addition, the steering mode can be shifted with the grip at any position around the dolly. Since there is no need for the grip to lift a foot off the ground for shifting or remove a hand from the dolly for shifting, a film sequence can continue smoothly through a shift. The electronic shifter 800 also shifts quickly, smoothly and quietly to avoid jarring the camera dolly or making noise.

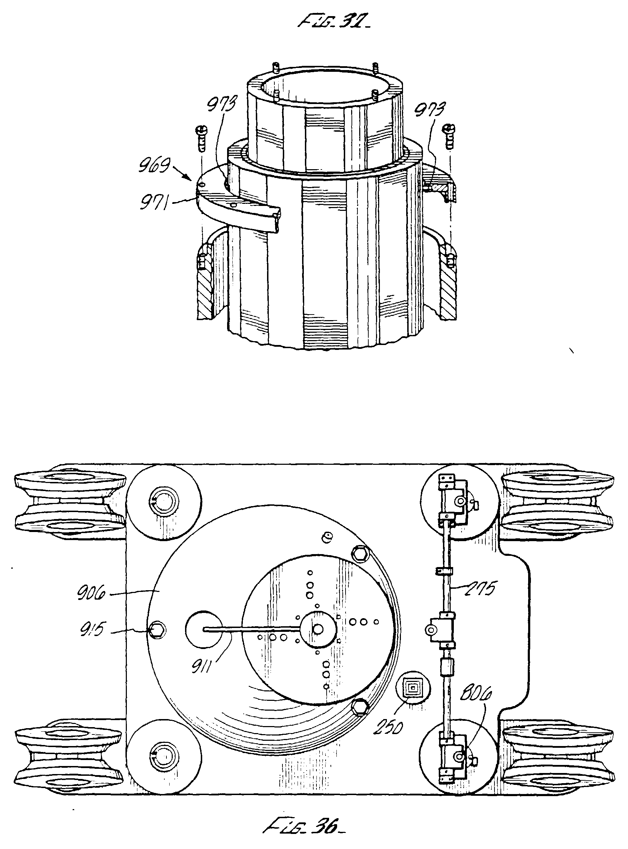

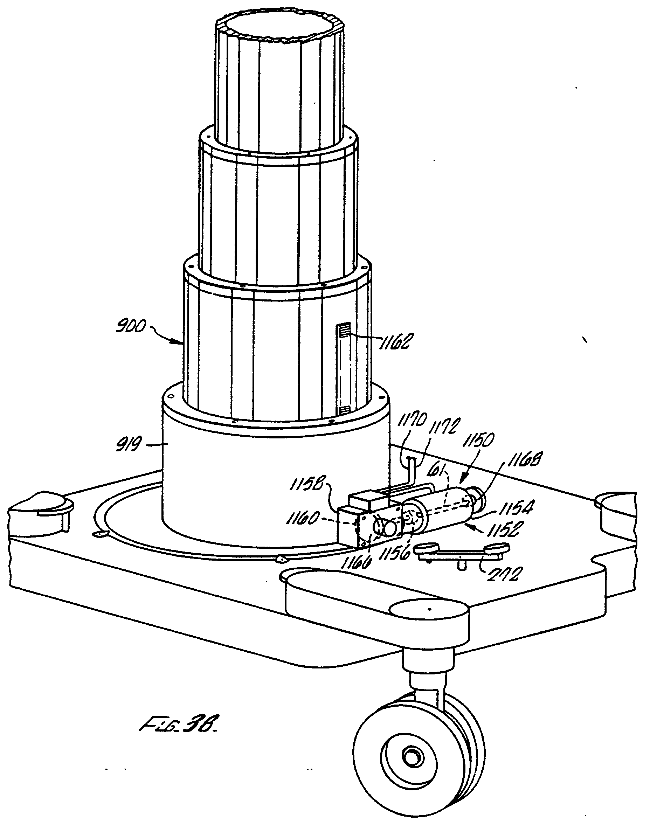

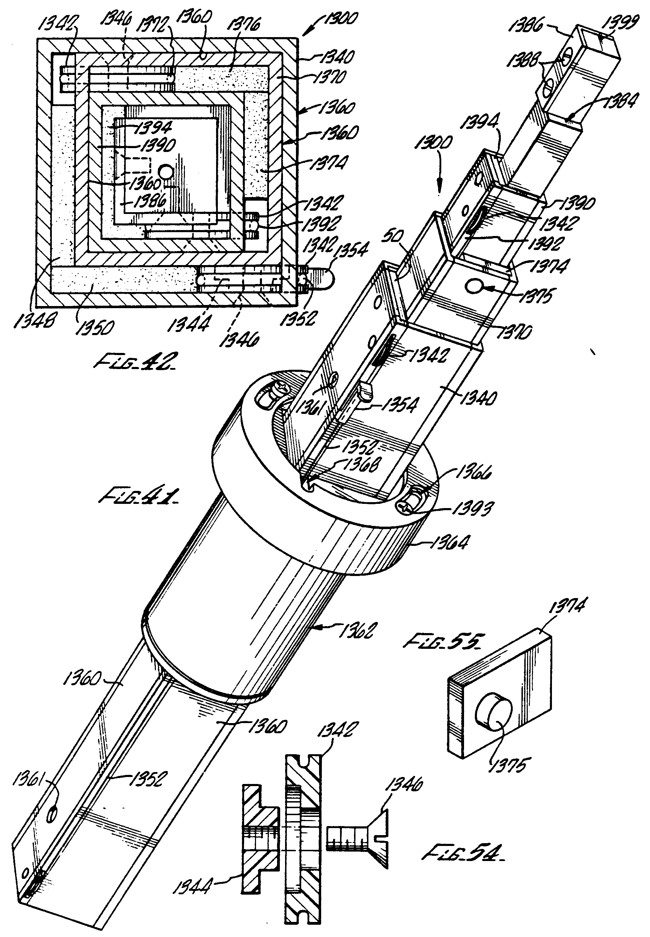

In certain applications, it is desirable to be able to push and steer the dolly from behind, without using the steering wheel 252. A steering bracket accessory 600, as shown in Figs. 29 and 30, is provided for this purpose. The steering bracket 600 has a first arm 602 pivoted to a second arm 604 at a pivot shaft 606. Bushings 624 for receiving accessories are provided on each of the arms 602, 604 of the steering bracket. A steering shaft 609 within the pivot shaft 606 is attached to a first sprocket 608. A second sprocket 611 is provided at the end of the first arm 602 and is drivably linked to the first sprocket by a belt 612. Idlers 610 are provided to tension the belt 612. A handle 614 is joined to a shaft 616. The shaft 616 is long enough to place the handle 614 at a comfortable height for the dolly grip and is preferably adjustable in length. The shaft 616 is releasably attached to the steering shaft 609 through a coupling 618. A capstan 620 is attached to and turns with the second sprocket 608. Thus, the capstan 620 turns identically with the handle 614. The capstan 620 has a square recess at its lower end adapted to fit over the square upper section of the kingpin 128. (See Figs. 3 and 5). The belt 612 connects to and drives only the capstan shown on the right side of Figs. 29 and 30 (which capstan attaches to the rear left dolly kingpin).

To install the steering bracket 600, the fasteners 136 in the two rear kingpins 128 are removed along with the caps 139. The square recesses in the capstans 620 at the ends of the first and second arms, are placed over and engaged onto the square kingpin ends. The caps 139 are then replaced and extended fastening bolts 622 are passed through the caps 139 and capstan 620, and are threaded into the kingpins. The steering bracket 600 is then rigidly attached to the rear dolly legs.

The first and second arms 602, 604 of the steering bracket 600 can open or close together to adapt to the various leg positions shown in Fig. 2. Movement of the handle 614 of the steering bracket 600 is transmitted through the belt 612, sprocket 611, and capstan 620 to the rear left kingpin 128. With reference to Figs. 2 and 3, the steering movement from the handle 614 works backwards through the steering system, such that the dolly can be steered in crab or conventional steering mode, with the legs in any position.

As shown in Fig. 1B, the pedestal 101 can be removed from the dolly 102 and stand on its own three legs 915, which are threadably adjustable in length. The column 900 of the pedestal 101 can raise and lower the camera 60. A separate turret placed on top of the pedestal provides panning and tilting movements. When the pedestal 101 is used as shown in Figure 1B, the steering drive tube 250 is disconnected and remains with the dolly 102.

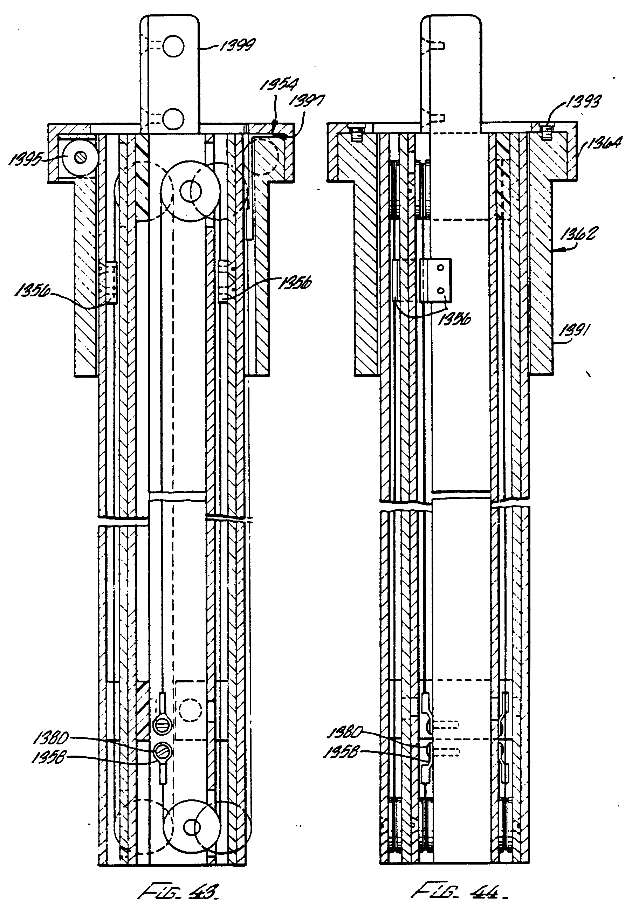

Referring to Figs. 30 and 31, the pedestal 101 is provided with a camera mounting plate 61. A pedestal tank weldment 901 has a flat tank deck 903 and a generally hemispherical tank body 904. A column support 919 is generally cylindrical and has a circular plate column support base 933. The column support 919 is welded to the tank deck 903 and tank body 904 and is an integral part of the tank weldment 901 which forms a gas- pressure-tight container.

As shown in Fig. 31, centrally located within the column support 919 is a drive cylinder 921 having an bottom end cap 923. The drive cylinder 921 has a round cross section which uniformly tapers outwardly from the lower end of the cylinder 921 to the upper end thereof. In a preferred embodiment, the drive cylinder 921 is approximately 12 inches (30.48 cm) long with a base diameter of 2.250 inches (5.715 cm) linearly increasing to a diameter of 2.263 inches (5.748 cm) at its top. This increase in the drive cylinder bore or diameter compensates for decreasing gas pressure as the pedestal is elevated, as described further below. The drive cylinder tapered diameter can be increased for additional load carrying capacity. The amount of taper can be selected for corresponding tank volumes.

A piston 943 having a seal 945 is axially slidable or displaceable within the drive cylinder 921. A gas lead tube 911 connects the tank volume 906 to the drive chamber 944 below the piston 943. The ambient chamber 946 above the piston 943 in the drive cylinder 921 is vented to the outside environment. The seal 945 is preferably an O-ring PRP 568-033. This O-ring has reduced volume so the sealing forces are less, to reduce friction. The O-ring size can be varied somewhat by selecting appropriate groove dimensions. The O-ring maintains a seal between the piston 943 and the drive cylinder 921 along the entire stroke through the drive cylinder 921, e.g., the seal 945 seals against both a 2.2500 bore and a 2.2630 bore. Felt or other soft shock absorbing material end stops 952 and 953 are provided at each end of the cylinder bore 921 to quiet and cushion the movement of the piston 943 at the lower and upper ends of the drive cylinder 921. Fig. 31 shows the piston 943 at its bottom position resting against the lower felt end stop 952. Only the tank 906, lead tube 911, and the variable volume drive chamber 944 (which are all interconnected) contain pressurized gas.

A first column section 927 has a core cylinder 935 secured to the top of a drive rod 948 attached to the piston 943. The outer walls 928 of the first column section 927 are joined to the core cylinder 935 by an annular first column section base 929. The first column section base 929 may be welded to the tubular outer walls 928 and core cylinder. The bottom surface of the first column section base 929 rests within the fixed column support 919 when the column assembly 900 is in the down or collapsed condition. A second column section 961 has an integral base 977 and is nested concentrically within the first column section 927. Similarly, a third column section 975 having an integral third column section base 988 is nested within the second column section 961, and a fourth or top column section 987 (without a base) is nested within the third column section 975. In a preferred embodiment, the column support 919 is 10.0 inches in diameter and the first, second, third and fourth or final column sections are respectively 8.50 (21.59 cm), 7.00 (17.78 cm), 5.50 (13.97 cm) and 4.00 inches (10.16 cm) in diameter. However, it should be noted that although their sizes are described in terms of a diameter, the first through fourth column sections are somewhat octagonal, rather than purely round, as shown in Fig. 5.

A cylinder end cap 993 is threaded onto the upper end of the drive cylinder 921. A bushing 995 held in place by the cylinder end cap 993 slidably supports the drive rod 948. A steering frame assembly 1003 is rigidly attached to the final column section 987 only. The steering frame assembly 1003 is not connected to the other sections although it may rest on top of the ends of the other column sections with the column in the collapsed or down position as shown in Fig. 31.

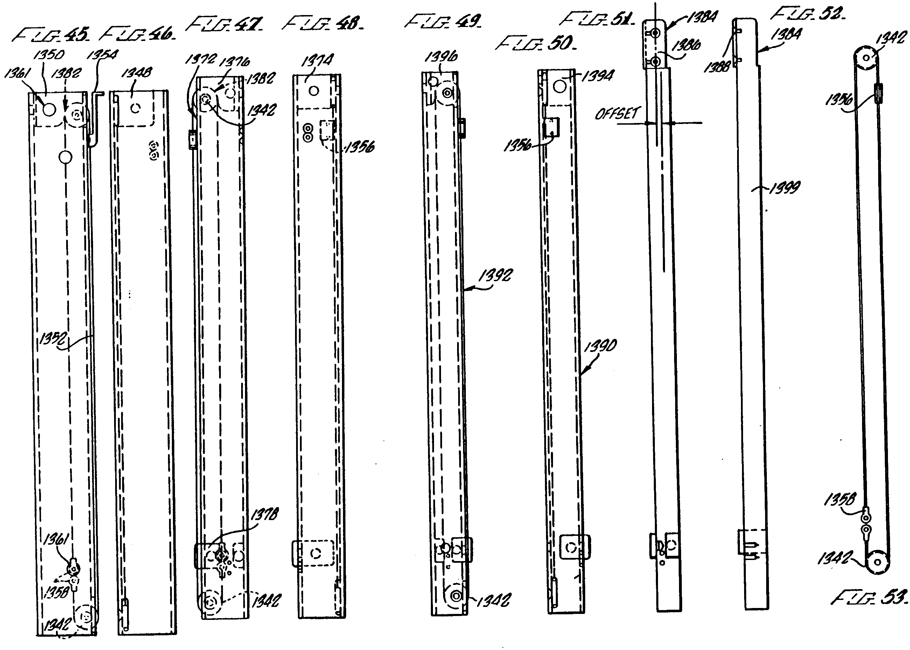

Referring to Figs. 31 and 32, pulleys 947 are attached to the inside surfaces of the first, second and third column sections 928, 961 and 975 by flathead pulley mounting bolts 957. The pulley mounting bolts 957 have countersunk beads and engage threaded bearing centers within the pulleys 947. A first section cable 949 has a cable stud 934 extending through clearance holes 913 in the first column section base 929 and in the column support base 933 and is secured by lock nuts 955. The first column section cable 949 passes over the pulley 947 attached near the top of the first column section 928 and terminates in a block 966 attached to the outer surface of the lower end of the second column section 961.

Similarly, a second column section cable 954 has an end stud 956 which passes through clearance holes 914 in the bases 977 and 929 and 933 of the first and second column sections and the base. Lock nuts 955 secure the end stud 956 to the base 929 of the first column section, i.e., they prevent the stud end 956 (and all of the stud ends) from pulling out of the base 929. The second column section cable 954 passes over a pulley 957 on the top of the second column section 961 and terminates in a block 968 attached to the outside surface of third column section 975, adjacent its base.

Similarly, a third column section cable 960 has a stud end 962 passing through the second and third column section bases 977 and 988 and secured by lock nuts 955 to the base 977. Similar to the other column sections, the third column section cable 960 passes over a pulley 957 on the inside wall of the third column section 975 and terminates in a block 972 attached near the lower end of the fourth column section 987. The fourth column section 987 has no base or end surface and is similar in shape to an octagonal tube.

Fig. 31 being a cross section illustrates two pulley end cable systems for each column section. However, as is shown in Fig. 32, each column section has four pulley/cable assemblies.

The cables may be terminated in the blocks by passing the cable end through a hole in the block and crimping a sleeve over the cable to prevent it from pulling through the hole in the block. The lock nuts 955 are used for adjusting the preset in the cables and to secure the stud ends of the cables into the bases. Clearance holes are provided through the base of the column support 919 around the lock nuts 955 on the stud ends of the second and third column section cables.

Referring to Fig. 32, the column support 919 preferably has eight inner roller channels 925 equally spaced around its circumference, i.e., at 45° intervals. The fourth column section 987 has four outer roller slots 926 equally spaced around its outside surface. The first, second and third column sections 927, 961 and 975 have both inner roller channels 925 and outer roller slots 926 radially aligned with and partially overlying their inner roller channels 925, and also aligned with the roller channels in the column support 919 and fourth column section 987. The inner roller channels 925 may be broached or milled in a scallop shape. Outer slots 926 (which may be broached or milled with a channel cross-section) extend along the length of the four column sections and the column support. Inner channels 925 need only be long enough to accommodate the rollers 1053.

Referring to Figs. 32, 33, and 34, equally spaced between the pulleys 957 are roller blocks 1051, i.e. with four roller blocks in between each column section. For improved rigidity, 8 equally spaced roller blocks may be used at the highest stress interface between the column support 919 and the first column section 927. Each roller block 1051 has a body 1052 and rollers 1053 mounted on a pin 1066 between mounting tabs 1055. Four threaded roller block mounting holes 1057 are provided in the body 1052. Adjustment slots 1059 are provided at the base of each mounting tab 1055, to allow for a small amount of flexing of the tabs 1055 for adjustment of the engagement of the rollers 1053 during assembly. Each roller block body 1052 is radiused on its inner and outer surfaces to match the specific position the roller block will occupy and the column assembly. As shown in Fig. 32, the roller blocks 1051 are provided with four different curvatures R. The rollers 1053 have an internal bearing which mounts on the pin 1066 extending through the mounting tabs 1055. A hardened steel strip or runner 1061 is secured into the outer roller slots 926 by a single fastener at the top of each of the roller slots. The other or bottom end of the strip 1061 is held into the slot 926 (after assembly) by the rollers 1053.

Referring now to Fig. 34, the roller blocks 1051 are tightly screwed or bolted onto their respective column sections through the threaded mounting holes 1057, at the top end of each column section or the column support. The roller block bodies 1052 are bolted into position over the slots in the column sections and act as stiffening members. Set screws 1063 are then progressively adjusted around the column assembly 900 forcing the mounting tabs 1055 to flex slightly inwardly to adjust the rolling engagement of the rollers 1053 against the strips 1061 in the adjacent section. The rollers 1053 roll only on the strip 1061. A small gap 1065 separates the back of the rollers 1053 from the inner roller channels 925. By providing the inner channels 925 and outer slots 926 respectively, relatively large size rollers 1053 may be used without requiring an excessively large diameter column assembly. The relatively large size of the rollers 1053 provides a quiet and smooth operation as well as a highly rigid column assembly operable in minimal space.

For clarity of illustration, the roller blocks 1051 are not shown in Fig. 31, although they are located at the top ends of the column sections in between the rollers, as shown in Fig. 32.

Referring to Figure 37, to increase the stiffness of the column assembly, and to cover over the interstitial openings between the column sections, annular structural shields 969 are provided in between the column sections. A mounting ridge 971 on the structural shields 969 supports and prevents deflection under load of the column sections upper edges. Felt wipers 973 on each structural shield 569 rub against the strips 1061 as the column assembly moves, to keep the strip clean and further dampen any vibration.

Referring to Figs. 7, 30, 31 and 35, a steering wheel assembly 1000 includes a steering frame chassis 1003. A steering wheel plate 1009 having a rubber coated steering rim or wheel 252 is attached to an outer bearing race frame 1015 and a steering sprocket 1007. The steering wheel may be round or ovular. An oval shaped steering allows the camera support to maintain a narrow profile for passing through narrow doorways, etc., but also provides the operator or grip with an increased wheel radius for control and pushing. The plate 1009 is attached to the frame chassis 1003 through an inner bearing frame section 1013 on the frame chassis 1003. The steering frame chassis 1003 is rigidly attached to the fourth column section 987, and consequently cannot rotate. The steering wheel plate 1009 carrying the steering wheel 252 and the steering sprocket 1007 is rotatable with respect to the steering frame chassis 1003 by virtue of the bearing 1020 formed by the outer bearing race frame 1015, the inner bearing frame section 1013 and balls 1017, preferably made from nylon for increased noise reduction in operation. Rather than fill the entire bearing 1020 with nylon balls, a combination of teflon spacers and nylon balls may be used.

The spacer in the bearing is preferably a teflon o-ring section that slides in the race formed by the bearing frames 1013 and 1015. This reduces the number of balls required in this relatively large diameter bearing and provides good bearing efficiently for handling intermittent fast spin or rotation. The rolling surfaces on frames 1013 and 1015 are ground polished.

A lower cover plate 1004 is attached to the frame chassis 1003. Rotatably mounted on the lower cover plate 1004 is an idler sprocket 1023 (Fig. 34) and a steering drive sprocket 1025. A steering drive belt, preferably a Gates Rubber Co. POLYCHAIN GT toothed belt drivingly loops around and engages the steering sprocket 1007, idler sprocket 1023 and the steering drive sprocket 625. Accordingly, when the steering wheel 252 is turned, the steering sprocket 607 turns with it and thereby turns the steering drive sprocket 625. The steering sprocket 607 preferably has 112 teeth and may be a Gates 8M 112 sprocket with the steering drive sprocket 625 having 28 teeth, e.g., a Gates 8M 28 sprocket. If the pedestal 101 will be used with the camera dolly 102, the sprockets 1007 and 1025 must be selected in coordination with the steering system of the dolly, to maintain angular correspondence between movement of the steering wheel 252 and the dolly wheels, i.e., to insure they rotate the same number of degrees.

Referring to Fig. 35, the basic telescoping steering drive tube assembly 250 comprises four nested square tube sections 1071 (a square bar), 1075, 1076 and 1077 (square tubes) with rubber o-rings provided between the sections. These sections may alternatively be separated by Teflon spacer inserts and have open cell neoprene stops between the sections for damping or other suitable material. The sections 1071, 1075, 1076 and 1077 slide in a telescoping manner to follow the vertical movement of the steering wheel assembly 1000 as column is raised and lowered. In the embodiment shown in Fig. 35, the four sections of the telescoping steering drive tube assembly 250 do not necessarily extend uniformly or progressively, as do the column sections. However, in the tube assembly shown in Fig. 41, a cable and pulley system is used to achieve smooth, silent and uniform movement.

The steering tube drive assembly sections 1071, 1075, 1076 and 1077 of Fig. 35 may alternatively be mechanically linked to their corresponding column section which will pull up its steering drive tube section, causing the telescoping steering drive 250 to extend in the same manner as the column assembly. As shown in Fig. 7, the base of the steering drive tube 250 extends through and drivably engages sprocket 262 within the camera dolly, thereby linking the steering wheel assembly 1000 of the pedestal to the steering system in the camera dolly. A set screw or similar quick release device secures the inner shaft 1071 of the telescoping steering drive tube assembly to the sprocket 1025 in the pedestal steering assembly.

As shown in Fig. 30 a latch assembly 1091 is provided on the tank deck. A hook 1093 extends downwardly from the lower cover plate 1004. With the column assembly fully lowered, the hook engages the spring loaded latch assembly 1091 and prevents the column assembly from extending without first releasing the latch assembly 1091.

In operation, the camera is attached to the pedestal through the mounting plate 61. Compressed gas, preferably nitrogen, is provided through the delivery tube 911 into the tank volume 906. Sufficient gas is delivered until the pressure acting on the piston 943 causes the column assembly to be urged upwardly with the force counterbalancing the weight of the camera. The column assembly can then be easily raised or lowered, notwithstanding the weight of the camera, by lifting hand action on the steering wheel 252. Additional small weights can be placed on a weight tray 253 (Fig. 30) if desired to aid in counterbalancing. A relief valve 1095 prevents overpressurization. A pressure gauge 909 on the tank deck 1003 (Fig. 1) indicates the gas pressure.

Compressed gas is supplied to the tank 906, and it also concurrently flows through the lead tube 911 to the drive chamber 944. Tank 906 and drive chamber 844 are essentially always at the same gas pressure. The gas pressure in the drive chamber exerts a force $F_1$ on the piston 943 cross section. For example, if the gas pressure is 100 p.s.i. (689.5 k Pa), and the cross section area of the piston 943 (at the bottom of the stroke as shown in Fig. 31) is 3.976 $in^2$ (25.65 $cm^2$) (i.e., a 2.25 in diameter piston), the force $F_1$ = 100 p.s.i. x 3.14 $in^2$ = 398 lbs (180 Kgf). Neglecting friction and column component weight, this 398 lb. force will counterbalance a camera load weight of 398/4 = 99 lbs., (45 Kgf) since the column assembly has a 1:4 drive ratio.

The tank volume 906 is fixed and is connected to the drive chamber 944 i.e. the volume of the drive cylinder 921 below the piston 943. In addition, after the tank volume 906 is charged with compressed gas, the compressed gas source (e.g. a nitrogen bottle) is removed. As the piston 943 is driven upwardly by Force $F_i$, the volume containing the compressed gas increases. Specifically, the volume of the drive chamber 944 increases. Consequently, the gas pressure drops (as determined by the gas laws) as the piston 943 rises. In conventional pedestals this results in a drop in the counterbalancing force from the bottom to the top of the piston stroke.

This variable counterbalancing force makes it very difficult to accurately maintain camera position at a given height.

In the present pedestal, drive cylinder 921 tapers outwardly from bottom to top. As the piston 943 rises, the seal 945 expands radially outwardly effectively increasing the cross section area of the piston on which the compressed gas exerts pressure. Hence, towards the top of the drive cylinder 921, the drop in gas pressure is offset by the increase in "piston" surface area to the extent that product of the gas pressure x surface area and the resulting counterbalancing force is substantially constant. Thus the force $F_1$ is substantially constant throughout the stroke. Therefore, the camera remains properly counterbalanced at all elevations of the pedestal and no "drift" or positioning difficulties are encountered.

As the piston 943 is driven upwardly by the gas pressure, it carries with it the drive rod 948 and the core cylinder 935 which is integral with the entire first column section 927. As this occurs the base 929 of the first column section 927 lifts all of the other column sections 961, 975 and 987. Consequently, the pulleys 947 which are fixed to the column sections move up. The cables 949, 954 and 960 (four on each section) then lift the next inner column section by equal amounts such that the column assembly 900 uniformly extends with all sections moving up by equal relative distance. In absolute terms, the fourth column section 987 extends 4 times the extension of the first column section 927, with the second and third column sections 961 and 975 extending 2 and 3 times thereof, respectively. The tank weldment has an operating maximum pressure of 300 p.s.i. enabling to pedestal to counterbalance up to about 297 lbs (135 Kgf).

Since the column support 919 is offset (to the "back") of the tank weldment (Fig. 30), the steering drive sprocket 1025 and the steering drive tube 250 can be placed inwardly and away from the steering wheel 252. This allows the operator to grip the steering wheel 252 from various angles or directions without interference from the drive sprocket 1025, tube 250 or lower cover plate 1004. If the column support 919 were centered in the tank weldment, the drive sprocket 1025 would have to be very close the steering wheel 252 and could interfere with the operators grip (for the same size steering wheel).

As shown in Fig. 36, for improved flexibility of use, the pressure gauge 909 is within the tank weldment diameter with the tank weldment made purely round without any protrusion. The round tank weldment can then be rotated to different positions on the camera dolly, allowing the pedestal column to be shifted front to back and side to side by twice the eccentricity of the column on the tank weldment. This feature, for example, allows the camera lens to extend further forward of the dolly, without use of any accessory extension plates.

A column drive system 1150 is provided as an accessory. As shown in Fig. 38, the drive system 1150 includes a driver unit 1152 having an electric motor 1154 linked to a gear reduction unit 1156 attached to a housing 1158. The housing 1158 contains a spur gear 1160 mounted on a shaft 1161 extending from the gear reduction unit 1156. The spur gear 1160 is engageable into a toothed rack 1162 through a rack slot 1164 in the column support 919 through actuation of an engager knob 1166. The rack preferably comprises teeth with about a .062 inch (.16 cm) pitch milled into the column section. The engager knob is threaded into the housing 1158 to pivot the spur gear into and out of engagement with the rack. A hand knob 1168 is provided to manually turn the shaft 1161. Power and control wires 1170 and 1172 run from the drive system 1150 to an electronic steering mode shifter accessory 800 (Fig. 27) mounted underneath the dolly. Preferably wires 1170 and 1172 plug into a connector on the deck of the dolly linked through an internal wiring harness to the shifter 800. Control circuitry within the shifter 800 can drive the column between preselected positions, using the drive system.

Since the column 900 is designed to operate in a balanced condition, the drive system need only exert a relatively small force on the rack to raise or lower the column.

To install the drive system accessory 1150, the housing 1158 is bolted to the support 919, with the gear 1160 extending through the rack slot 1164 (Fig. 39). The engager knob 1166 is turned and pivots shaft 1161 and spur gear into the rack for automatic or remote column elevation control. The engager knob 1166 is reversed to pivot the spur gear out of the rack for manual (hand) control or initial column load balancing. When the column drive accessory 1150 is removed from the column, a cover is placed over the rack slot 1164. The rack 1162 can be a permanent feature on the column since it does not effect column operation when the drive system is not installed.

A column braking system 1200 accessory, as shown in Fig. 39 has a brake unit 1206 attached to the outside perimeter of the column support 919 just above the tank plate 903. Control lines run from the brake unit 1006 to a brake control switch which may preferably be on the electronic shifter accessory 800, (Fig. 27) and optionally provided on a combination remote hand control unit having a brake switch 1221 and a steering mode shift switch (Fig. 20). The power supply in the electronic shifter 800 also preferably powers the switches and motor of the braking system 1200.

Referring to Figs. 39 and 40, within the brake unit housing 1210 is a dog 1212 having a cam slot 1214 and a toothed end 1216. A cam 1213 mounted on a drive shaft 1222 of a motor 1218 is positioned within the cam slot 1214. The cam and slot are dimensioned to preferably provide about .070 inch of horizontal movement of a dog having a .062 inch rack teeth. Upper and lower leaf springs 1224 and 1226 provide a slight amount of spring force on the dog 1212 to maintain the dog in a centered position when no load is applied to the dog.

The centering springs provide sufficient vertical movement of the dog to allow it to shift slightly up or down to align with and engage the teeth on the rack. Upper and lower limit switches 1228 and 1230 are positioned slightly above and below the nominal center position of the dog 1212. A hand knob 1221 is attached to the drive shaft 1222 to manually engage and disengage the dog. As shown in Fig. 39, the dog 1212 extends through the rack slot 1164 at the lowest point of the column support 919 above the plate 903.

In operation, with the column in any selected position, the brake unit 1206 is actuated by pressing a brake switch on a remote hand control or by using a similar switch on the electronic shifter 800. This causes the motor 1222 and cam 1213 to turn through an acute angle driving the dog 1212 into the rack 1204. With the dog engaged into the rack, the first column section 927 can move only as far as the amount of play in the mechanism, e.g., 1/8 of an inch (0.3 cm) up or down with respect to the column support 919. This effectively locks the column assembly 900 substantially into a fixed position, since all of the telescoping column sections must move together.

If, with the brake system on or engaged (i.e. with the dog 1212 engaged to the rack 1162) the load on the column assembly 900 becomes unbalanced, the rack 1162 will exert an upward or downward force on the dog 1212. If, for example, the camera or load on the column assembly 900 is removed and the compensation force from the compressed gas remains, the rack 1162 will exert an upward force on the dog 1212. Conversely, if the load on the column assembly 900 is increased, or if gas pressure is drawn from the tank 1204, the rack 1162 will exert a downward force on the dog 1230. In either case, the dog will move sufficiently against the centering springs to actuate either the upper or lower limit switch 1228 or 1230. Actuation of either limit switch will cut power to and prevent any movement by the motor 1222, so that the column assembly will remain locked in position (notwithstanding contrary signals from the remote brake switch or the panel mounted brake switch 1208), until the imbalance is removed.

The brake system 1200 is advantageously provided as an accessory to the pedestal 101, allowing the column assembly 900 to be braked or locked at any position. It can also be used to achieve preset amounts of column extension, by, for example, providing a scale alongside the rack 1204. Although various rack and dog configurations may be acceptable, since the column may exert forces of up to, for example, 250 pounds (113.5 Kgf), a positive tooth engagement between the dog and rack is preferred over designs relying exclusively on friction. If the brake system 1200 is used, the latch 691 (Fig. 30) is not necessary, since the brake system 1200 can positively lock the column assembly 900 into the completely collapsed position (as does the latch 1091) as well as any other position of intermediate or full extension. Although the column support 919 in this instance is immovable, it may be considered as a first column segment and the first column section 927 considered as the second column segment.

Turning to Fig. 41, an improved telescoping steering drive column 1300 for use instead of column 250, where uniform extension is desired for improved operation and aesthetic appearance. In column 1300, a first tube 1340 having a pulley 1342 mounted adjacent to its upper end and another pulley 1342 at its lower end. A first cable loop 1352 passes over the pulleys 1342 on the first tube 1340. A tab 1354 is secured to the first cable loop 1352 on the outside of the first tube 1340.

Referring to Figs. 41, 42, 43, and 44, a second tube 1370 is slidably positioned within the first tube 1340. As shown in Fig. 42, the second tube 1370 is diagonally offset from the first tube 1340. Spacers 1348 and 1350 positioned between the first tube 1340 and the second tube 1370 maintain the offset positioning.

The second tube 1370 also has a pair of spaced apart pulleys 1342 with a second cable loop 1372 positioned over the pulleys. Referring to Figs. 43-48, the first cable loop 1352 has eyelets 1358 attached to the lower end of the second tube 1370 by screws 1380. Access holes 1361 are provided through the first tube 1340 for assembly purposes. A third tube 1390 is slidably positioned within the second tube 1370, and is held in an offset position from the second tube 1370 by spacers 1374 and 1376, as shown in Fig. 42. Eyelets 1358 on the second cable loop 1372 are attached to the lower end of the third tube 1390 by screws 1380. A crimp plate 1356 attached to the second cable loop 1372 is attached to the upper end of the second tube 1370.

The third tube 1390 also has spaced apart pulleys 1342 supporting a third cable loop 1392, in a similar manner. A fourth tube or centerbar 1399 is slidably positioned in an offset manner within the third tube 1390 by spacers 1394 and 1396. Eyelets 1358 on the third cable loop 1392 are attached at the lower end of the centerbar 1399. A crimp plate 1356 secured to the third cable loop 1392 is attached to the upper end of the third tube 1390.

The top of the centerbar 1399 has relieved sections or sides 1384 and an angle plate 1386 screwed to the opposite two sides of the centerbar 1399, to recenter or realign the square cross section of the centerbar 1399 with the center of the first tube 1340. This compensates for the offset location of the centerbar 1399 from the third tube 1390, and maintains alignment between the square receptacles in sprocket 1025 at the top and sprocket 260 at the bottom (Fig. 7).

The outside surfaces of the first tube 1340, second tube 1370, third tube 1390 and fourth tube or centerbar 1399 are covered with a low friction coating or tape 1360 made of for example, Delrin or Teflon. Similarly, the spacers 1348, 1350, 1374, 1376, and 1394 and 1396 which hold the tubes and centerbar in position are also preferably made of such a low friction material. The spacers 1350, 1376 and 1396 which are adjacent to pulleys have a radiused or contoured face 1382 facing the pulley 1342, to prevent the cable loops 1352, 1372 and 1392 from possibly jumping off of the pulleys 1342.

Although not shown, equivalent spacers may be provided at the lower end of each tube 1340, 1370 and 1390, to similarly prevent the cable loops from possibly jumping off the pulleys 1342 at the lower ends. Spacers 1378 at the lower ends of the tube maintain the tubes in position and provide low friction lower sliding surfaces.

In Fig. 42, the first, second and third tubes 1340, 1370 and 1390 have been cross hatched for clarity of illustration only. As shown therein, the second tube 1370 (preferably a 1.000 inch (2.54 cm) square) is diagonally offset from the first tube 1340 (preferably a 1.25 inch (3.175 cm) square), such that the first and second tubes slide against each other on two adjacent surfaces, with the low friction tape 1360 on the outside surface of the second tube 1370 acting to reduce sliding friction.

The offset positioning provides space within the compact dimensions of the first tube 1340 for the pulleys 1342 and the cable loops. The pulleys 1342 protrude through slots in the walls at the upper ends of each of the tubes (the walls are preferably .062 inch (.157 cm) thick). This allows for attachment of the tab 1342 and the crimp plates 1356, and also facilitates the use of relatively large pulleys, leading to quieter operation. The third tube 1390 (preferably a .750 inch (1.905 cm) square) is diagonally offset from the second tube 1370, such that the third tube 1390 is aligned with and coaxial with the first tube 1340, as shown in Fig. 42. Again, low friction tape 1360 acts as a bearing surface between the third tube 1390 and the second tube 1370, with spacers 1374 and 1376 maintaining the offset position. The fourth tube or centerbar 1399 (preferably a .500 inch (1.27 cm) square) is diagonally offset from the third tube 1390 and held in position by spacers 1394 and 1396.

Fig. 54 shows an enlarged detail of a preferred construction of the pulleys 1342 wherein a hub 1344 is held within the pulley 1342 by a screw 1346. Fig. 55 illustrates a typical spacer, such as spacer 1374. A boss 1375 on the spacer 1374 protrudes through a hole 1375 (in this case in the second tube 1370) to hold the spacers 1374 in place.

The drive collar 1362 is pivotally mounted on the dolly top deck 277. A retainer cap 1364 covers the upper end of the drive collar 1362. Screws 1393 pass through slots 1366 in the retainer cap 1364. The retainer cap has a tab slot 1368 through which the tab 1354 can pass, when the slot 1368 is aligned with the tab 1354. A set of four orthogonal rollers 1395 at the upper end of the drive collar 1362 allows the first tube 1340 to roll smoothly into and out of drive collar 1362. Rollers 1395 are arranged in a square. A tab recess 1397 is provided in the drive collar 1362 so that the tab 1354 can be secured and held in position between the drive collar 1362 and the retainer cap 1364, when the retainer cap 1364 is turned to the retaining position.

In operation, the upper end of the centerbar 1399 is placed into a square receptacle fitting in sprocket 1025 and held there by a set screw (Figs. 7 and 35). The first tube 1340 is passed through the rollers 1395 in the drive collar 1362, with the tab 1354 positioned into the tab recess 1397. The retainer cap 1364 is turned about the drive collar 1362 so that the tab slot 1368 no longer aligns with the tab recess 1397. This holds the tab 1354 in place. The screws 1393 optionally may be tightened to further secure the tab 1354 into position. With the column 1300 so installed, the steering wheel assembly 1000 is drivably linked to the dolly steering system 201 as shown in Fig. 7. The column 1300 can be quickly and easily removed in the reverse sequence.

As the main column 900 which supports the camera is raised and lowered, the cable loops within the steering drive column 1300 cause uniform extension and contraction of the tubes, in a smooth, quiet and relatively dragless manner. Specifically, as the main column 900 is raised, the centerbar 1399 is pulled up. This causes the third cable loop 1392 to pull up the third tube 1390. In turn this upward movement of the third tube 1390 causes the second cable loop 1372 to pull up the second cable loop 1372. Again, in turn raising the second tube 1370 causes the first cable loop 1352 to raise the first tube 1340, with all tubes rising by equal amounts. When the camera on the main column 900 is lowered, the same movements occur in the opposite or lowering direction. When the steering wheel 252 is turned to steer the wheels of the dolly, the torque applied by the belt 1021 in the steering wheel assembly 1000 is transmitted by the torsional interaction of the tubes of the steering drive column 1300, to the rollers 1395 and to the drive collar 1362 which is linked directly into the dolly belt system 201.

**Claims**

1. An adjustable pedestal (101) for a camera (60), comprising:

   an extensible column (900) supporting a mounting plate (61) for a camera (60), with the column (900) containing a compressed gas to counter-balance the weight of the camera when mounted;
   a hollow drive cylinder (921) having inner walls and first and second ends;
   a cylindrical piston (943) slidably displaceable within said cylinder (921);
   a seal (945) on said piston, substantially slidably sealing said piston (945) against said inner walls at any piston position between said first and second ends of said cylinder; and
   a first column section (927); characterised by further comprising:

   a compressed gas tank (906) in the pedestal (101); and in that
   said inner walls of said cylinder (921) taper outwards from the first end of the cylinder to the second end of the cylinder, with the second end having a cross-sectional area greater than that of said first end; in that
the hollow cylinder (921) connects to the tank in a gas tight manner; in that
said cylinder piston (943) has a radius r and a surface area of $\pi r^2$ on which, in use, the compressed gas exerts a force; in that
said seal (945) is expandable; and in that
said first column section (927) is attached to said piston.

2. The pedestal of claim 1, further comprising shock absorbing materials (921,953) at the first and second ends of the cylinder.

3. The pedestal of claim 1 or 2, wherein the seal comprises an O-ring (945).

4. The pedestal of any one of claims 1 to 3, wherein:

   the tank (906) has a volume $V_T$ for containing pressurized gas;
   the cylinder (921) has a volume $V_C$ connectable to said tank (906), the first end of the cylinder has a first circular cross-section area $A_1$ and the second end has a second cross-section area $A_2$; and
   the tank (906) has a pressure $P_i$ when said piston (945) is adjacent said first cross-section area and a pressure $P_f$ when said piston (945) is adjacent said second cross-section area; such that

5. The pedestal of any one of the preceding claims, wherein said tank (906) is generally hemispherical with a generally flat round top surface and the base (919) of the column (900) is cylindrical and positioned offset on said tank (906).

6. The pedestal of any one of the preceding claims, further comprising a second column section (961) extensible from the first column section (927), a third column section (975) extensible from said second column section (961) and a fourth column section (987) extensible from said third column section (975).

FIG. 1.

FIG. 39.

FIG. 40.

FIG. 1a.

FIG. 1b.

FIG. 2

FIG. 3.

_Fig. 4_

EP 0 785 390 A2

FIG. 5.

_Fig. 6._

Fig. 1.

FIG_8_

FIG. 10

FIG. 9

Fig. 13.

Fig. 11.

Fig. 12a.

Fig. 12b.

Fig. 14.

Fig. 16.

Fig. 15.

Fig.17.

Fig.18.

Fig. 19.

Fig. 20.

Fig. 21.

Fig. 22A.

Fig. 22B.

Fig. 23.

START

IDLE STAND BY

GO TO B

A

GO TO A

B

SELECT CRAB CONV.

SET TIMER SET REGISTER TO CRAB

SET TIMER SET REGISTER TO CONV.

HAS CONV. BEEN SELECTED

HAS CRAB BEEN SELECTED?

HAS TIMER RUN OUT ?

IS STEERING ALIGNED ?

IS STEERING ALIGNED ?

HAS TIMER RUN OUT ?

*ADD TIME TO TIMER

*ADD TIME TO TIMER

RUN MOTOR CRAB DIRECTION LOCK CLUTCH

RESET REGISTERS RESET ADDTIME SYSTEM

RUN MOTOR CONV. DIRECTION LOCK CLUTCH

HAS CRAB POS. BEEN DETECTED?

HAS CONV. POS. BEEN DETECTED?

RETURN TO START

FIG.24.

Fig. 25A

EP 0 785 390 A2

FIG. 25B.

36

FIG. 26.

FIG. 27

_FIG. 28._

_FIG. 29._

Fig. 30.

EP 0 785 390 A2

FIG. 31.

_FIG. 33._

_FIG. 34._

_FIG. 32._

_Fig. 35._

FIG. 37

FIG. 36

Fig. 38.

Fig.42.

Fig.41.

Fig.55.

Fig.54.

*FIG. 43.*

*FIG. 44.*

FIG. 45. FIG. 46. FIG. 47. FIG. 48. FIG. 49. FIG. 50. FIG. 51. FIG. 52.

FIG. 53.

EP 0 785 390 A2